# EUROPEAN PATENT APPLICATION

(11) **EP 4 835 161 A1**
(43) Date of publication of application: **04.11.2026**
(21) Application number: 24913089.9
(22) Date of filing: 27.12.2024
(51) Int. Cl.: C25B 13/08, C25B 1/04, C25B 9/00, C25B 9/23

(54) **SOLID POLYMER ELECTROLYTE MEMBRANE, MEMBRANE ELECTRODE ASSEMBLY, WATER ELECTROLYSIS DEVICE, METHOD FOR PRODUCING HYDROGEN, AND METHOD FOR PRODUCING MEMBRANE ELECTRODE ASSEMBLY**

(30) Priority: 28.12.2023 JP 2023222220
(71) Applicant: AGC Inc., Chiyoda-ku Tokyo 100-8405 (JP)
(72) Inventor: Hayabe, Shintaro, Tokyo 100-8405 (JP); Okuyama, Takumi, Tokyo 100-8405 (JP); Sawada, Toshiaki, Tokyo 100-8405 (JP)
(74) Representative: Müller-Boré & Partner Patentanwälte PartG mbB
(86) International application number: PCT/JP2024/046352
(87) International publication number: WO 2025/143203

(57) **Abstract**

The object of the present disclosure is to provide a polymer electrolyte membrane with suppressed curling and with suppressed hydrogen crossover, and a membrane electrode assembly, a water electrolyzer and a membrane electrode assembly production method.

The polymer electrolyte membrane of the present disclosure is a polymer electrolyte membrane, which comprises: a first layer that contains a first fluorinated polymer having ion exchange groups and a platinum-containing material, and a second layer that contains a second fluorinated polymer having ion exchange groups; wherein the concentration of a platinum-containing material in the second layer is lower than the concentration of the platinum-containing material in the first layer; the ion exchange capacity of the first fluorinated polymer is higher than the ion exchange capacity of the second fluorinated polymer; and the polymer electrolyte membrane further has a reinforcing member provided on the surface side on the first layer side of the polymer electrolyte membrane relative to the center position in the thickness direction of the polymer electrolyte membrane.

## Description

### TECHNICAL FIELD

The present disclosure relates to a polymer electrolyte membrane, a membrane electrode assembly, a water electrolyzer, a hydrogen production method and a membrane electrode assembly production method.

### BACKGROUND ART

In the so-called power-to-gas technology for storing and using surplus electric power by converting it to gas, the utilization of polymer electrolyte membrane water electrolyzers (PEM water electrolyzers) has been explored.

Recent years have seen a demand for water electrolyzers with higher performance, and more specifically, reduced hydrogen crossover. Herein, hydrogen crossover refers to a phenomenon where, in a water electrolyzer, hydrogen gas generated at a cathode transfers to an anode side through a polymer electrolyte membrane. The occurrence of hydrogen crossover results in a problem of deterioration in hydrogen gas recovery.

Patent Document 1 discloses a water electrolyzer comprising: a membrane having first and second opposed major surfaces, a thickness extending between the first and second major surfaces, and first, second, and third regions equally spaced across the thickness, wherein the first region is the closest region to the first major surface, wherein the second region is the closest region to the second major surface, wherein the third region is located between the first and second regions, wherein the first and third regions are each essentially free of both metallic Pt and Pt oxide, and wherein at least one of metallic Pt or Pt oxide is incorporated into the second region; a cathode comprising a first catalyst on the first major surface of the membrane; and an anode comprising a second catalyst on the second major surface of the membrane.

### PRIOR ART DOCUMENTS

### PATENT DOCUMENTS

Patent Document 1: U.S. Patent No. 11,414,770

### DISCLOSURE OF INVENTION

### TECHNICAL PROBLEM

The present inventors have conducted, with reference to Patent Document 1, further studies on a water electrolyzer that has a polymer electrolyte membrane containing a platinum-containing material and as a result found that although hydrogen crossover can be suppressed, a phenomenon of curling of the polymer electrolyte membrane should be reduced.

The present disclosure was made to solve the above problems, and according to an embodiment of the present invention, the object is to provide a polymer electrolyte membrane with suppressed curling and with suppressed hydrogen crossover. Further, according to an embodiment of the present invention, another object is to provide a membrane electrode assembly, a water electrolyzer, a hydrogen production method and a membrane electrode assembly production method.

### SOLUTION TO PROBLEM

The present disclosure includes the following configurations.
[1] A polymer electrolyte membrane, which comprises:
   a first layer that contains a first fluorinated polymer having ion exchange groups and a platinum-containing material, and
   a second layer that contains a second fluorinated polymer having ion exchange groups,
   wherein the concentration of a platinum-containing material in the second layer is lower than the concentration of the platinum-containing material in the first layer,
   the ion exchange capacity of the first fluorinated polymer is higher than the ion exchange capacity of the second fluorinated polymer, and
   the polymer electrolyte membrane further has a reinforcing member provided on the surface side on the first layer side of the polymer electrolyte membrane relative to the center position in the thickness direction of the polymer electrolyte membrane.
[2] The polymer electrolyte membrane according to [1], wherein the polymer electrolyte membrane further contains cerium oxide.
[3] The polymer electrolyte membrane according to [1] or [2], wherein the second layer contains no platinum-containing material.
[4] The polymer electrolyte membrane according to any one of [1] to [3], wherein the reinforcing member is a woven fabric.
[5] The polymer electrolyte membrane according to [4], wherein the woven fabric is made of a material selected from the group consisting of a polytetrafluoroethylene, a tetrafluoroethylene/perfluoroalkyl vinyl ether copolymer, a polyether ether ketone and a polyphenylene sulfide.
[6] The polymer electrolyte membrane according to any one of [1] to [5], wherein the thickness of the first layer is less than the thickness of the second layer.
[7] The polymer electrolyte membrane according to any one of [1] to [6], wherein the ratio of the thickness of the first layer to the sum of the thickness of the first layer and the thickness of the second layer, is 0.50 or less.
[8] The polymer electrolyte membrane according to any one of [1] to [7], wherein the sum of the thickness of the first layer and the thickness of the second layer is 30 to 400 µm.
[9] The polymer electrolyte membrane according to any one of [1] to [8], wherein the absolute value of the difference between the ion exchange capacity of the first fluorinated polymer and the ion exchange capacity of the second fluorinated polymer is 0.10 to 1.40 meq/g dry resin.
[10] The polymer electrolyte membrane according to any one of [1] to [9], wherein the ion exchange groups of the first fluorinated polymer are sulfonic acid functional groups, and the ion exchange groups of the second fluorinated polymer are sulfonic acid functional groups.
[11] A membrane electrode assembly comprising:
   the polymer electrolyte membrane as defined in any one of [1] to [10],
   a cathode catalyst layer provided on the surface side of the second layer of the polymer electrolyte membrane, and
   an anode catalyst layer provided on the surface side of the first layer of the polymer electrolyte membrane.
[12] A water electrolyzer comprising:
   the membrane electrode assembly as defined in [11],
   a power supply unit connecting the cathode catalyst layer side and the anode catalyst layer side of the membrane electrode assembly, and
   a water supply unit to supply water to the anode catalyst layer side.
[13] A hydrogen production method, which comprises electrolyzing water by the water electrolyzer as defined in [12] to produce hydrogen.
[14] A method for producing a membrane electrode assembly comprising the polymer electrolyte membrane as defined in any one of [1] to [10], a cathode catalyst layer and an anode catalyst layer,
   which comprises providing the cathode catalyst layer on the surface side on the second layer side of the polymer electrolyte membrane, and providing the anode catalyst layer on the surface side on the first layer side of the polymer electrolyte membrane.

### ADVANTAGEOUS EFFECTS OF INVENTION

According to an embodiment of the present invention, a polymer electrolyte membrane with suppressed curling and with suppressed hydrogen crossover can be provided. Further, according to an embodiment of the present invention, a membrane electrode assembly, a membrane electrode assembly production method, a hydrogen production method and a water electrolyzer can be provided.

Fig. 1 is a cross-sectional view schematically illustrating an example of the polymer electrolyte membrane of the present disclosure.
Fig. 2 is a cross-sectional view schematically illustrating another example of the polymer electrolyte membrane of the present disclosure.
Fig. 3 is a cross-sectional view schematically illustrating an example of the membrane electrode assembly of the present disclosure.

### DESCRIPTION OF EMBODIMENTS

The following definitions of terms apply throughout the present specification and claims unless otherwise specified.

An "ion exchange group" refers to a group containing at least one ion exchangeable for a different ion, such as a sulfonic acid functional group and a carboxylic acid functional group as described below.

A "sulfonic acid functional group" refers to a sulfonic acid group (-SO₃H) or a sulfonate group. The sulfonate group may be, for example, (-SO₃⁻)Ma⁺, (-SO₃⁻)₂Mb²⁺ or (-SO₃⁻)₃Mc³⁺ (where Ma⁺ is an alkali metal ion or a quaternary ammonium cation; Mb²⁺ is a divalent metal ion; Mc³⁺ is a trivalent metal ion). When there are two ligands, the number of ion exchange groups is counted as 2, and when there are three ligands, the number of ion exchange groups is counted as 3.

A "carboxylic acid functional group" refers to a carboxylic acid group (-COOH) or a carboxylate group. The carboxylate group may be, for example, (-COO⁻)Ma⁺, (-COO⁻ )₂Mb²⁺ or (-COO⁻)₃Mc³⁺ (where Ma⁺ is an alkali metal ion or a quaternary ammonium cation; Mb²⁺ is a divalent metal ion; and Mc³⁺ is a trivalent metal ion). When there are two ligands, the number of ion exchange groups is counted as 2, and when there are three ligands, the number of ion exchange groups is counted as 3.

A "precursor membrane" refers to a membrane containing a polymer having groups convertible to ion exchange groups.

A "group convertible to an ion exchange group" refers to a group that can be converted to an ion exchange group by treatments such as hydrolysis and conversion to acid form.

A "group convertible to a sulfonic acid functional group" refers to a group that can be converted to a sulfonic acid functional group by treatments such as hydrolysis and conversion to acid form.

A "group convertible to a carboxylic acid functional group" refers to a group that can be converted to a carboxylic acid functional group by known treatments such as hydrolysis and conversion to acid form.

A "unit" in a polymer refers to an atomic group derived from a single monomer molecule, which is formed by polymerization reaction of the monomer. A unit may be an atomic group formed directly by polymerization or may be an atomic group formed by polymerization followed by modification to a partially different structure.

A numerical range expressed using "to" means a range including numerical values described before and after "to" as the lower and upper limits. In a series of numerical ranges described in the present specification, the upper limit or lower limit of a numerical range may be replaced by the upper limit or lower limit of another numerical range in the same series. The upper limit or lower limit of any numerical range described in the present specification may be replaced by any of numerical values indicated in Examples.

Now, the present disclosure will be described in detail with reference to an embodiment shown in the drawings. The following description of the constituents may be made based on typical embodiments of the present disclosure, however, the present disclosure is not limited to such embodiment.

In the embodiment shown in the drawings, for easy visualization and description, the constituents may sometimes be shown at a scale different from actual.

### [Electrolyte membrane]

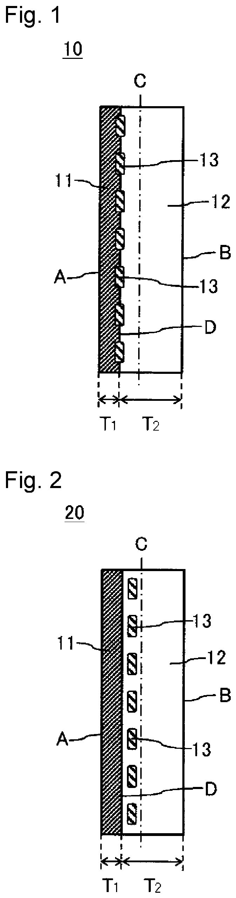

Fig. 1 is a cross-sectional view schematically illustrating an example of the configuration of the polymer electrolyte membrane of the present disclosure (hereinafter also referred to simply as "electrolyte membrane").

An electrolyte membrane 10 of the present disclosure comprises a first layer 11, a second layer 12 and a reinforcing member 13. As shown in Fig. 1, among surfaces (major surfaces) of the electrolyte membrane 10, a surface on the first layer 11 side will be referred to as "surface A", and a surface on the second layer 12 side will be referred to as "surface B". A plane positioned at the center in the thickness direction of the electrolyte membrane 10 will be referred to as "center plane C", and the interface between the first layer 11 and the second layer 12 will be referred to as "interface D".

The first layer 11 contains a first fluorinated polymer having ion exchange groups (hereinafter also referred to as "fluorinated polymer (I-1)") and a platinum-containing material, and the second layer 12 contains a second fluorinated polymer having ion exchange groups (hereinafter also referred to as "fluorinated polymer (I-2)"). In the electrolyte membrane 10 of the present disclosure, the concentration of the platinum-containing material in the first layer 11 is higher than the concentration of the platinum-containing material in the second layer 12. Accordingly, it may be said that the platinum-containing material is arranged biased to the surface A side of the electrolyte membrane 10. Further, the ion exchange capacity of the fluorinated polymer (1-1) contained in the first layer 11 is higher than the ion exchange capacity of the fluorinated polymer (I-2) contained in the second layer 12.

The reinforcing member 13 is, as shown in Fig. 1, provided on the surface A side of the first layer 11 side relative to the center plane C located at the center position in the thickness direction of the electrolyte membrane 10 (hereinafter also referred to simply as "provided on the surface A side"). This is confirmed also from the fact that the thickness T₁ of the first layer 11 is less than the thickness T₂ of the second layer 12 and that the reinforcing member 13 is provided at the interface D between the first layer 11 and the second layer 12.

The electrolyte membrane of the present disclosure, when applied to a water electrolyzer, has suppressed curling and can suppress hydrogen crossover. The reason has not been clearly understood in detail yet, but is estimated as follows.

When the electrolyte membrane of the present disclosure is applied to a water electrolyzer, the ion exchange capacity of the fluorinated polymer contained in the first layer is higher than the ion exchange capacity of the fluorinated polymer contained in the second layer, and hydrogen generated at the cathode side and oxygen generated at the anode side react to form water on the platinum-containing material contained at least in the first layer, whereby the transfer of hydrogen to the anode side (hydrogen crossover) can be suppressed.

Further, it is considered that the fluorinated polymer (I-1) having a relatively high ion exchange capacity has a relatively high content of the ion exchange groups, and the fluorinated polymer (I-2) having a relatively low ion exchange capacity has a relatively low content of the ion exchange groups. It is considered that a difference between the contents of the ion exchange groups in the fluorinated polymers contained in the two layers laminated, leads to a difference between the dimensional change rates of the two layers, and thus to curling of the laminate. It is considered that in the electrolyte membrane of the present disclosure, the reinforcing member to improve the strength of the electrolyte membrane is provided on the surface A side on the side of the first layer having a relatively high content of the ion exchange groups, whereby curling of the electrolyte membrane that has the first layer and the second layer, differing in the ion exchange capacity, can be suppressed.

By suppressing curling of the electrolyte membrane, damages on the surface of catalyst layers caused by contact between the catalyst layers formed on the surface of the electrolyte membrane and the edges of the electrolyte membrane can be suppressed.

In the electrolyte membrane 10 shown in Fig. 1, the thickness T₁ of the first layer 11 is less than the thickness T₂ of the second layer 12, and the reinforcing member 13 is provided at an interface D between the first layer 11 and the second layer 12.

However, the electrolyte membrane of the present disclosure is not limited to the configuration shown in Fig. 1 so long as the concentration of the platinum-containing material in the first layer 11 is higher than the concentration of the platinum-containing material in the second layer 12, the ion exchange capacity of the fluorinated polymer (I-1) is higher than the ion exchange capacity of the fluorinated polymer (I-2), and the reinforcing member is provided on the surface A side.

For example, in the electrolyte membrane of the present disclosure, the thicknesses of the first layer and the second layer, and the position of the reinforcing member may be suitably selected.

Fig. 2 is a cross-sectional view schematically illustrating another example of the configuration of the electrolyte membrane of the present disclosure.

An electrolyte membrane 20 of the present disclosure shown in Fig. 2 has a first layer 11, a second layer 12 and a reinforcing member 13. The meanings of symbols, functions of the members, etc. are the same as in Fig. 1.

In the electrolyte membrane 10 shown in Fig. 1, the reinforcing member 13 is provided at the interface D between the first layer 11 and the second layer 12, however, in the electrolyte membrane 20 shown in Fig. 2, the reinforcing member 13 is provided inside the second layer 12, and between a center plane C at the center position in the thickness direction of the electrolyte membrane 20, and the interface D. The desired effects are obtained also by the electrolyte membrane 20 having the reinforcing member 13 in such a configuration.

The reinforcing member may be provided inside the first layer. For example, in the electrolyte membrane in which the thickness T₁ of the first layer is less than the thickness T₂ of the second layer, the reinforcing member may be provided between the surface A and the interface D.

Further, in the electrolyte membrane 10 shown in Fig. 1, the thickness T₁ of the first layer is less than the thickness T₂ of the second layer, however, the thickness T₁ of the first layer may be the same as the thickness T₂ of the second layer, or may be more than the thickness T₂ of the second layer. The thickness T₁ of the first layer is preferably equal to or less than the thickness T₂ of the second layer, more preferably less than the thickness T₂ of the second layer.

Now, configurations and physical properties, etc. of the electrolyte membrane of the present disclosure will be described in further detail below.

### [First layer]

The first layer contains the fluorinated polymer (1-1) and the platinum-containing material.

The first layer may contain other component other than the fluorinated polymer (I-1) and the platinum-containing material. The other component may be cerium oxide.

In the examples shown in Fig. 1 and Fig. 2, the first layer has a single layer structure, however, the first layer may have a multilayer structure consisting of a plurality of layers. In a case where the first layer has a multilayer structure, in the layers constituting the multilayer structure, the compositions, the ion exchange capacities and the contents of the fluorinated polymer (I-1), the types and the contents of the platinum-containing material, and the types and the contents of the other component, may be the same or different.

In the electrolyte membrane, the first layer and the second layer may be distinguished, for example, by the content of the platinum-containing material. Specifically, based on the average value of the concentration of the platinum-containing material in the thickness direction of the electrolyte membrane, the region having a concentration of the platinum-containing material equal to or higher than the average value may be taken as the first layer, and the region having the concentration of the platinum-containing material less than the average value may be taken as the second layer.

The method of measuring the concentration of the platinum-containing material in the thickness direction of the electrolyte membrane will be described later.

### <Fluorinated polymer (I-1)>

The first layer may contain single type of the fluorinated polymer (I-1) or may contain two or more types of the fluorinated polymer (1-1).

Although the first layer may contain a polymer other than the fluorinated polymer (I-1), it is preferred that the polymer in the first layer is substantially composed of the fluorinated polymer (I-1). Here, the expression "substantially composed of the fluorinated polymer (I-1)" means that the content of the fluorinated polymer (1-1) is 90 mass% or more to the total mass of the polymers in the first layer. The upper limit of the content of the fluorinated polymer (I-1) is 100 mass% to the total mass of the polymers in the first layer.

As examples of the polymer other than the fluorinated polymer (1-1), there may be mentioned one or more types of polyazole compounds selected from the group consisting of polymers of heterocyclic compounds each containing one or more nitrogen atoms in the ring and polymers of heterocyclic compounds each containing one or more nitrogen atoms and oxygen and/or sulfur atoms in the ring.

Specific examples of the polyazole compounds include polyimidazole compounds, polybenzimidazole compounds, polybenzobisimidazole compounds, polybenzoxazole compounds, polyoxazole compounds, polythiazole compounds and polybenzothiazole compounds.

In consideration of the oxidation resistance of the electrolyte membrane, a polyphenylene sulfide resin and a polyphenylene ether resin may also be mentioned as specific examples of the other polymer.

The fluorinated polymer (I-1) has ion exchange groups. Specific examples of the ion exchange groups include sulfonic acid functional groups and carboxylic acid functional groups. Sulfonic acid functional groups are preferred to achieve a lower electrolysis voltage when the electrolyte membrane is applied to a water electrolyzer.

In the following, embodiments of a fluorinated polymer having sulfonic acid functional groups (hereinafter also referred to as "fluorinated polymer (S)") will be discussed mainly.

The fluorinated polymer (S) preferably has units based on a fluorinated olefin and units having a sulfonic acid functional group and a fluorine atom.

The fluorinated olefin may be, for example, a C₂₋₃ fluoroolefin having one or more fluorine atoms in the molecule. Specific examples of the fluoroolefin include tetrafluoroethylene (hereinafter also referred to as "TFE"), chlorotrifluoroethylene, vinylidene fluoride, vinyl fluoride and hexafluoropropylene. Among others, TFE is preferred in terms of the monomer production cost, the reactivity with other monomers and the ability to give the fluorinated polymer (S) with excellent properties.

Single type of the fluorinated olefin may be used or two or more types may be used in combination.

The units having a sulfonic acid functional group and a fluorine atom are preferably units represented by the formula (1).

Formula (1) -[CF₂-CF(-L-(SO₃M)ₙ)]-

Here, L is a (n+1)-valent perfluorohydrocarbon group which may contain an etheric oxygen atom.

The etheric oxygen atom may be located at a terminal end or may be located between carbon atoms of the perfluorohydrocarbon group.

The number of carbon atoms in the (n+1)-valent perfluorohydrocarbon group is preferably 1 or more, more preferably 2 or more, and is preferably 20 or less, more preferably 10 or less.

As L, preferred is a (n+1)-valent perfluoroaliphatic hydrocarbon group which may contain an etheric oxygen atom. More preferred is a divalent perfluoroalkylene group which may contain an etheric oxygen atom as corresponding to an embodiment of n = 1, or a trivalent perfluoroaliphatic hydrocarbon group which may contain an etheric oxygen atom as corresponding to an embodiment of n = 2.

The above-mentioned divalent perfluoroalkylene group may be linear or branched.

M is a hydrogen atom, an alkali metal or a quaternary ammonium cation. The n M may be the same or different.

n is 1 or 2.

As the units represented by the formula (1), units represented by the formula (1-1), units represented by the formula (1-2), units represented by the formula (1-3) or units represented by the formula (1-4) are preferred.

Formula (1-1) -[CF₂-CF(-O-R^{f1}-SO₃M)]-

Formula (1-2) -[CF₂-CF(-R^{f1}-SO₃M)]-

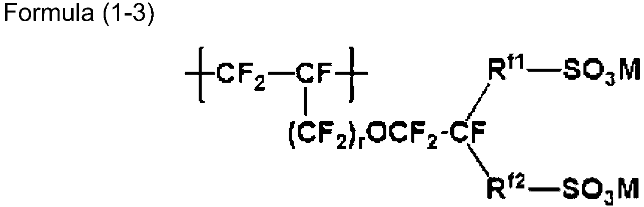

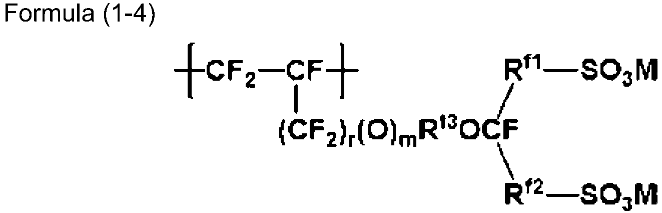

Here, R^{f1} is a perfluoroalkylene group which may contain an oxygen atom between carbon atoms. The number of carbon atoms in the perfluoroalkylene group is preferably 1 or more, more preferably 2 or more, and is preferably 20 or less, more preferably 10 or less.

R^{f2} is a single bond or a perfluoroalkylene group which may contain an oxygen atom between carbon atoms. The number of carbon atoms in the perfluoroalkylene group is preferably 1 or more, more preferably 2 or more, and is preferably 20 or less, more preferably 10 or less.

R^{f3} is a single bond or a perfluoroalkylene group which may contain an oxygen atom between carbon atoms. The number of carbon atoms in the perfluoroalkylene group is preferably 1 or more, more preferably 2 or more, and is preferably 20 or less, more preferably 10 or less.

r is 0 or 1.

m is 0 or 1.

M is as described above.

As the units represented by the formula (1-1) and the units represented by the formula (1-2), units represented by the formula (1-5) are more preferred.

Formula (1-5) -[CF₂-CF(-(CF₂)ₓ-(OCF₂CFY)_{y}-O-(CF₂)_{z}-SO₃M)]-

Here, x is 0 or 1, y is an integer of 0 to 2, z is an integer of 1 to 4, Y is F or CF₃, and M is as described above.

Specific examples of the units represented by the formula (1-1) include the following units. In the formulae, w is an integer of 1 to 8, v is an integer of 1 to 5, and M is as defined above.

-[CF₂-CF(-O-(CF₂)_{w}-SO₃M)]-

-[CF₂-CF(-O-CF₂CF(CF₃)-O-(CF₂)_{w}-SO₃M)]-

-[CF₂-CF(-(O-CF₂CF(CF₃))ᵥ-SO₃M)]-

Specific examples of the units represented by the formula (1-2) include the following units. In the formulae, w is an integer of 1 to 8, and M is as defined above.

-[CF₂-CF(-(CF₂)_{w}-SO₃M)]-

-[CF₂-CF(-CF₂-O-(CF₂)_{w}-SO₃M)]-

As the units represented by the formula (1-3), preferred are units represented by the formula (1-3-1). In the formulae, M is as defined above.

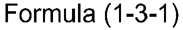

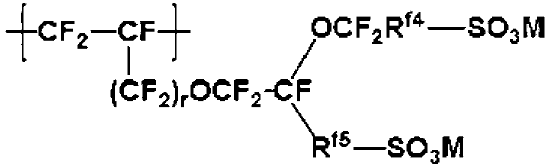

R^{f4} is a C₁₋₆ linear perfluoroalkylene group, and R^{f5} is a single bond or a C₁₋₆ linear perfluoroalkylene group which may contain an oxygen atom between carbon atoms. r and M are as defined above.

Specific examples of the units represented by the formula (1-3-1) are as follows.

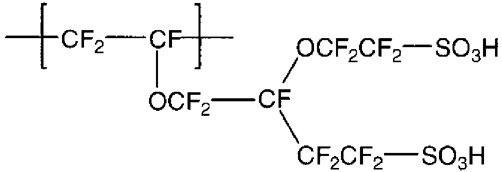

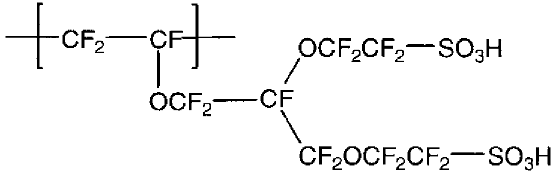

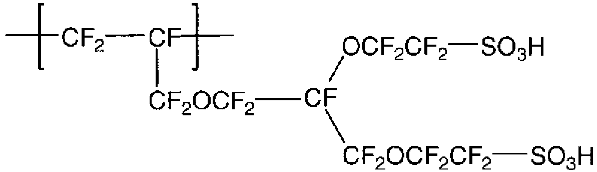

As the units represented by the formula (1-4), preferred are units represented by the formula (1-4-1). In the formulae, R^{f1}, R^{f2} and M are as defined above.

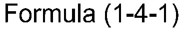

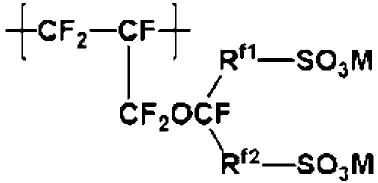

Specific examples of the units represented by the formula (1-4-1) are as follows.

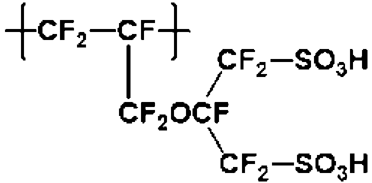

Single type of the units having a sulfonic acid functional group and a fluorine atom may be used or two or more types may be used in combination.

The fluorinated polymer (I-1) may contain, in addition to the units based on the fluorinated olefin and the units having a sulfonic acid functional group and a fluorine atom, units based on other monomer.

Specific examples of the other monomer include CF₂=CFR^{f6} (where R^{f6} is a C₂₋₁₀ perfluoroalkyl group), CF₂=CF-OR^{f7} (where R^{f7} is a C₁₋₁₀ perfluoroalkyl group) and CF₂=CFO(CF₂)ᵥCF=CF₂ (where v is an integer of 1 to 3).

The content of the units based on the other monomer is preferably 30 mass% or less to all units in the fluorinated polymer (I-1) to ensure a certain level of ion exchange performance.

The ion exchange capacity of the fluorinated polymer (1-1) is, with a view to further decreasing the electrolysis voltage when the electrolyte membrane is applied to a water electrolyzer and with a view to suppressing hydrogen crossover, preferably 0.90 meq/g dry resin or more, more preferably more than 1.10 meq/g dry resin, further preferably 1.20 meq/g dry resin or more, particularly preferably 1.25 meq/g dry resin or more, most preferably 1.30 meq/g dry resin or more.

The ion exchange capacity of the fluorinated polymer (I-1) is, in view of the strength of the membrane electrode assembly when hydrated, preferably 2.00 meq/g dry resin or less, more preferably 1.50 meq/g dry resin or less, further preferably 1.43 meq/g dry resin or less.

The ion exchange capacity of the fluorinated polymer (1-1) may be adjusted by changing the content of the ion exchange groups in the fluorinated polymer (I-1).

The "ion exchange capacity" is a value corresponding to the ion exchange performance per dry mass of a fluorinated polymer, calculated as follows. The weight of a fluorinated polymer is measured, after 24 hours of incubation in a glove box purged with dry nitrogen, as the dry mass of the fluorinated polymer. Then, the fluorinated polymer is immersed in a 2 mol/L aqueous sodium chloride solution at 60°C for 1 hour. After the fluorinated polymer is washed with ultrapure water and recovered, the solution in which the fluorinated polymer has been immersed is titrated with 0.1 mol/L aqueous sodium hydroxide solution to determine the ion exchange capacity of the fluorinated polymer.

The ion exchange capacity of the fluorinated polymer in the electrolyte membrane, the first layer and the second layer in the thickness direction may be calculated, for example, by measurement on the cross sectional image along the electrolyte membrane thickness direction by Raman microspectroscopy. Specifically, the electrolyte membrane is cut in a thickness direction, measurement is conducted on the obtained cross sectional image along the thickness direction by a Raman microscope. From the intensity ratios of peaks derived from TFE units and peaks derived from ion exchange groups (for example SO₃X) at side chains, which appear in the obtained Raman spectrum, the ion exchange capacity of the fluorinated polymer in the thickness direction can be calculated.

The content of the fluorinated polymer (I-1) is, in a case where the reinforcing member is provided inside the first layer, preferably 80 to 99 mass% to the total mass of the first layer, and in a case where the reinforcing member is not provided inside the first layer, preferably 90 to 99.9 mass% to the total mass of the first layer.

### <Platinum-containing material>

The platinum-containing material is a compound which contains a platinum atom. The platinum-containing material may be, for example, platinum itself, platinum oxide, a composite metal oxide containing platinum, or a platinum alloy.

Specific examples of the composite oxide containing platinum include MₓPt₃O₄ (where M is at least one metal atom selected from the group consisting of Li, Na, Mg, Ca, Zn, Cd, Co, Ni, Mn, Cu, Ag, Bi and Ce; and x is a value greater than 0 and 1 or less).

Specific examples of the platinum alloy include alloys each containing platinum and at least one metal selected from the group consisting of transition metals and noble metals other than platinum.

The second layer may contain single type of the platinum-containing material or may contain two or more types of the platinum-containing material.

The form of the platinum-containing material may be, for example, particulate form or sheet form. The platinum-containing material, when in particulate form, may be core-shell particles. Examples of the core-shell particles include those having a core made of carbon or containing a metal other than platinum and a shell containing platinum.

In the case where the platinum-containing material is in particulate form, the average particle size (D50) of the platinum-containing material is preferably 1 nm or more, more preferably 5 nm or more, further preferably 10 nm or more, particularly preferably 100 nm or more, and is preferably 50 µm or less, more preferably 30 µm or less, further preferably 14 µm or less, particularly preferably 7 µm or less. The average particle size (D50) of the platinum-containing material may be 500 nm or more.

The average particle size of the platinum-containing material is measured as follows.

The average particle size of the platinum-containing material is obtained by measuring particle sizes of 40000 particles in dry manner using image analysis particle size distribution measuring apparatus (for example manufactured by Malvern Panalytical, Morphologi (registered trademark) series), and determining the cumulative 50% size (D50) of a volume-based particle size distribution cumulative curve. In a case where particles of less than 500 nm are contained, equivalent circle diameters of 100 particles are measured by a scanning electron microscope (SEM) and the cumulative 50% size (D50) of a volume-based particle size distribution curve is obtained.

The platinum-containing material may be constituted by monodispersed primary particles or may be constituted by secondary particles having a plurality of primary particles agglomerated. In a case where the platinum-containing material contains secondary particles, to obtain the D50, particle sizes of the secondary particles are measured.

The mass of the platinum-containing material contained in the first layer is, per 1 cm² of the first layer surface, preferably 0.005 mg/cm² or more, more preferably 0.010 mg/cm² or more, further preferably 0.015 mg/cm² or more, and is preferably 0.050 mg/cm² or less, more preferably 0.040 mg/cm² or less. When the mass of the platinum-containing material contained in the first layer is equal to or more than the lower limit value, the hydrogen crossover can be further suppressed. When the mass of the platinum-containing material contained in the first layer is 0.050 mg/cm² or less, the electrolysis voltage of the electrolyte membrane can be further decreased, and a membrane electrode assembly and a water electrolyzer can be provided at low cost.

The mass ratio of the platinum-containing material to the fluorinated polymer (I-1) (mass of platinum-containing material/mass of fluorinated polymer (I-1)) in the first layer is preferably 0.0005 or higher, more preferably 0.004 or higher, further preferably 0.007 or higher, and is preferably 0.024 or lower, more preferably 0.014 or lower. When the mass ratio is 0.005 or higher, the hydrogen crossover can be further suppressed. When the mass ratio is 0.024 or lower, the electrolysis voltage of the electrolyte membrane can be further decreased, and a membrane electrode assembly and a water electrolyzer can be provided at low cost.

The platinum-containing material may be supported on a carrier. Specific examples of the carrier include carbon carriers such as carbon black powders, graphitized carbon, carbon fibers and carbon nanotubes.

In the case where the platinum-containing material is supported on a carrier, the amount of the platinum-containing material supported to the total mass of the platinum-containing material and the carrier is preferably 10 mass% or more, more preferably 20 mass% or more, further preferably 30 mass% or more, and is preferably 50 mass% or less.

The locations of presence of the platinum-containing material and the content of the platinum-containing material in each layer of the electrolyte membrane can be specified by elemental distribution analysis using, for example, an energy dispersive X-ray spectrometer (model "QUANTAX FlatQUAD", manufactured by Bruker).

### <Cerium oxide>

The first layer may further contain cerium oxide.

As described below, in view of more excellent chemical durability of the electrolyte membrane, in the electrolyte membrane, at least one of the first layer and the second layer preferably further contains cerium oxide.

The cerium oxide may be CeO₂ (cerium(IV) oxide) or may be Ce₂O₃ (cerium(lll) oxide), and in view of stability, it is preferably CeO₂.

The cerium oxide may be doped with a polyvalent metal ion of e.g. zirconium or praseodymium.

The cerium oxide is preferably in particulate form.

In a case where the cerium oxide is in particulate form, the average particle size (D50) of the cerium oxide is preferably 10 nm or more, more preferably 100 nm or more, further preferably 1 µm or more, particularly preferably 3 µm or more, and is preferably 30 µm or less, more preferably 14 µm or less, further preferably 10 µm or less.

When the average particle size of the cerium oxide is 10 nm or more, agglomeration of the cerium oxide is suppressed, and the cerium oxide may readily be formed into a stable dispersed state. When the average particle size of the cerium oxide is 30 µm or less, the chemical durability of an electrolyte membrane will further be improved.

The method of measuring the average particle size of the cerium oxide is the same as the method for measuring the average particle size (D50) of the platinum-containing material.

The mass of the cerium oxide per 1 cm² of the first layer is preferably 0.005 mg/cm² or more, more preferably 0.010 mg/cm² or more, further preferably 0.015 mg/cm² or more, and is preferably 0.050 mg/cm² or less, more preferably 0.030 mg/cm² or less.

When the mass of the cerium oxide is equal to or more than the above lower limit value, the first layer tends to be whitish, and foreign substances present in the first layer are likely to be visible. Thus, when the electrolyte membrane is applied to a water electrolyzer, a portion where the foreign substances are present in the electrolyte membrane can be avoided, and formation of pinholes in the electrolyte membrane, derived from the foreign substances, can be suppressed.

When the mass of the cerium oxide is equal to or less than the above upper limit value, the electrolysis voltage of the electrolyte membrane can further be reduced, and a membrane electrode assembly and a water electrolyzer can be provided at low cost.

The location of presence of the cerium oxide in the electrolyte membrane can be specified by elemental distribution analysis using, for example, an energy dispersive X-ray spectrometer (model "QUANTAX FlatQUAD", manufactured by Bruker).

The thickness T₁ of the first layer (the total thickness of layers in a case where the first layer has a multilayer structure) is preferably 5 to 60 µm, more preferably 10 to 40 µm, further preferably 10 to 30 µm. When the thickness T₁ of the first layer is equal to or more than the above lower limit value, the electrolyte membrane will have improved mechanical strength and more excellent current efficiency. When the thickness T₁ of the first layer is equal to or less than the above upper limit value, the electrolysis voltage of the electrolyte membrane can be suppressed low.

The thickness T₁ of the first layer and the thickness T₂ of the second layer may be obtained, for example, as follows. The cross section along the thickness direction of the electrolyte membrane is observed by an optical microscope, and the distance between a boundary that appears as the difference in concentration of the platinum-containing material, and each surface of the electrolyte membrane, is measured, to obtain the thickness. In a case where the second layer contains platinum, the thickness may be obtained also by measuring the concentration of the platinum-containing material in the thickness direction, by elemental distribution analysis of a cross section along the thickness direction of the electrolyte membrane, using an energy dispersive X-ray spectrometer (model "QUANTAX FlatQUAD", manufactured by Bruker).

### [Second layer]

The second layer contains the fluorinated polymer (I-2) having ion exchange groups and having an ion exchange capacity lower than the fluorinated polymer (I-1).

The second layer may contain other component other than the fluorinated polymer (I-2). The other component may be a platinum-containing material or cerium oxide.

The second layer may have a single layer structure or may have a multilayer structure consisting of a plurality of layers. In a case where the second layer has a multilayer structure, in the layers constituting the multilayer structure, the compositions, the ion exchange capacities and the contents of the fluorinated polymer (I-2), and the types and the contents of the other component, may be the same or different.

In a case where the second layer has a multilayer structure, it is preferred that all the ion exchange capacities of the fluorinated polymers (I-2) contained in the respective layers constituting the multilayer structure are lower than the ion exchange capacity of the fluorinated polymer (I-1) contained in the first layer.

### <Fluorinated polymer (I-2)>

The second layer may contain single type of the fluorinated polymer (I-2) or may contain two or more types of the fluorinated polymer (I-2).

The second layer may contain a polymer other than the fluorinated polymer (I-2), however, it is preferably composed substantially solely of the fluorinated polymer (I-2). The wording "composed substantially solely of the fluorinated polymer (I-2)" means a content of the fluorinated polymer (I-2) of 90 mass% or more to the total mass of the polymer in the second layer. The upper limit of the content of the fluorinated polymer (I-2) is 100 mass% to the total mass of the polymer in the second layer.

Specific examples of the other polymer other than the fluorinated polymer (I-2) are similar to the above-described other polymer other than the fluorinated polymer (I-1).

As the fluorinated polymer (I-2), it is preferred to use polymers similar to the polymers as the fluorinated polymer (I-1) including the preferred embodiments, except that they differ in the ion exchange capacity.

The ion exchange capacity of the fluorinated polymer (I-2) is, with a view to further decreasing the electrolysis voltage when the electrolyte membrane is applied to a water electrolyzer, preferably 0.90 meq/g dry resin or more, more preferably more than 1.10 meq/g dry resin, further preferably 1.15 meq/g dry resin or more, particularly preferably 1.20 meq/g dry resin or more, most preferably 1.25 meq/g dry resin or more.

The ion exchange capacity of the fluorinated polymer (I-2) is, in view of the strength of the membrane electrode assembly when hydrated, preferably 2.00 meq/g dry resin or less, more preferably 1.50 meq/g dry resin or less, further preferably 1.43 meq/g dry resin or less.

In the electrolyte membrane of the present disclosure, the ion exchange capacity of the fluorinated polymer (I-1) contained in the first layer is higher than the ion exchange capacity of the fluorinated polymer (I-2) contained in the second layer. By this, even in the first layer having a high concentration of the platinum-containing material, the electrolysis voltage can be decreased. Further, the hydrogen crossover can be suppressed.

The absolute value of the difference between the ion exchange capacity of the fluorinated polymer (1-1) and the ion exchange capacity of the fluorinated polymer (I-2) is, with a view to achieving further decreased electrolysis voltage and with a view to suppressing the hydrogen crossover, preferably 0.10 to 1.40 meq/g dry resin, more preferably 0.10 to 0.70 meq/g dry resin, further preferably 0.01 to 0.50 meq/g dry resin, particularly preferably 0.10 to 0.30 meq/g dry resin.

The ion exchange capacity of the fluorinated polymer (I-2) may be adjusted by changing the content of the ion exchange groups in the fluorinated polymer (I-2).

### <Platinum-containing material>

The concentration of the platinum-containing material in the second layer is lower than the concentration of the platinum-containing material in the first layer.

The second layer may contain the platinum-containing material at a concentration lower than the first layer, or may contain no platinum-containing material. The second layer contains preferably no platinum-containing material, since the electrolysis voltage can be decreased, by reducing the amount of platinum, which does not contribute to ion conductivity in the electrolyte membrane.

The wording "containing no platinum-containing material" means a mass of the platinum-containing material per 1 cm² of the second layer of 0.001 mg/cm² or less.

In a case where the second layer contains the platinum-containing material, the mass of the platinum-containing material contained in the second layer is, per 1 cm² of the second layer surface, preferably 0.050 mg/cm² or less, more preferably 0.040 mg/cm² or less, further preferably less than 0.015 mg/cm², and is preferably 0.005 mg/cm² or more. When the mass of the platinum-containing material contained in the second layer is equal to or less than the above upper limit value, the hydrogen crossover can further be suppressed.

The absolute value of the difference between the mass of the platinum-containing material contained in the first layer and the mass of the platinum-containing material contained in the second layer is, with a view to achieving more excellent effect of the present disclosure, per 1 cm² of the electrolyte membrane, preferably 0.010 mg/cm² or more, more preferably 0.015 mg/cm² or more, further preferably 0.030 mg/cm² or more, particularly preferably 0.040 mg/cm² or more, and is preferably 0.050 mg/cm² or less.

The second layer may further contain cerium oxide.

The cerium oxide contained in the second layer is similar to the cerium oxide contained in the first layer including the preferred embodiment.

In a case where the second film contains cerium oxide, the mass of the cerium oxide per 1 cm² of the second layer is preferably 0.005 mg/cm² or more, more preferably 0.010 mg/cm² or more, further preferably 0.015 mg/cm² or more, and is preferably 0.100 mg/cm² or less, more preferably 0.050 mg/cm² or less, further preferably 0.030 mg/cm² or less.

The reason why the mass of the cerium oxide is preferably within the above range is as already described for the cerium oxide contained in the first layer.

The mass of the cerium oxide per 1 cm² of the second layer may be lower than the mass of the cerium oxide per 1 cm² of the first layer. In this case, the absolute value of the difference between the mass of the cerium oxide contained in the second layer and the mass of the cerium oxide contained in the first layer is, per 1 cm² of the electrolyte membrane, preferably 0.005 mg/cm² or more and preferably 0.015 mg/cm² or less.

Further, the second layer may contain no cerium oxide. The wording "containing no cerium oxide" means the mass of the cerium oxide per 1 cm² is 0.001 mg/cm² or less.

According to another embodiment, the mass of the cerium oxide per 1 cm² of the first layer may be lower than the mass of the cerium oxide per 1 cm² of the second layer. In this case, the absolute value of the difference between the mass of the cerium oxide contained in the first layer and the mass of the cerium oxide contained in the second layer is, per 1 cm² of the electrolyte membrane, preferably 0.005 mg/cm² or more and preferably 0.015 mg/cm² or less.

The first layer may contain no cerium oxide.

The thickness T₂ of the second layer (the total thickness in a case where the second layer has a multilayer structure) is preferably 40 to 120 µm, more preferably 40 to 110 µm, further preferably 40 to 90 µm. When the thickness T₂ of the second layer is equal to or more than the above lower limit value, mechanical strength of the electrolyte membrane will improve, and more excellent current efficiency will be achieved. When the thickness T₂ of the second layer is equal to or less than the above upper limit value, the electrolysis voltage of the electrolyte membrane can be suppressed low.

The thickness T₁ of the first layer is equal to or less than the thickness T₂ of the second layer, more preferably less than the thickness T₂ of the second layer. It is possible to further suppress the hydrogen crossover by making the thickness T₁ of the first layer small and increasing the density of the platinum-containing material in the first layer, while keeping the sum of the thickness T₁ of the first layer and the thickness T₂ of the second layer at or above a certain level-.

Particularly, the ratio of the thickness T₁ of the first layer to the sum of the thickness T₁ of the first layer and the thickness T₂ of the second layer (that is T₁/(T₁+T₂)) is, in view of more excellent moldability at the time of production of the electrolyte membrane, preferably 0.50 or lower, more preferably 0.42 or lower, further preferably 0.33 or lower, particularly preferably 0.17 or lower, and is preferably 0.01 or higher, more preferably 0.02 or higher, further preferably 0.08 or higher.

The sum of the thickness T₁ of the first layer and the thickness T₂ of the second layer is, with a view to suppressing the hydrogen crossover, preferably 30 µm or more, and is preferably 400 µm or less, more preferably 300 µm or less, further preferably 200 µm or less, particularly preferably 90 µm or less, most preferably 60 µm or less.

### <Reinforcing member>

The reinforcing member functions to improve the dimensional stability, strength, handleability etc. of the electrolyte membrane.

The reinforcing member may be, for example, a porous body, a fiber, a woven fabric or a non-woven fabric, and is preferably a woven fabric.

The reinforcing member is constituted preferably by warp yarns and weft yarns which are orthogonal to each other.

The aperture ratio of the reinforcing member is preferably 50% or higher, more preferably 55% or higher, further preferably 60% or higher, particularly preferably 70% or higher, with a view to achieving a lower electrolysis voltage.

The upper limit value of the aperture ratio of the reinforcing member is preferably 90% or lower, more preferably 80% or lower, with a view to achieving higher strength of the electrolyte membrane.

The aperture ratio of the reinforcing member is calculated by the following formula (ε) based on the average diameter R1 of yarns constituting the reinforcing member and the average spacing P1 (hereinafter also referred to as "pitch P1") between adjacent ones of yarns constituting the reinforcing member.

Here, the average diameter R1 of yarns is an arithmetic mean of diameter measurements of 10 different yarns arbitrarily selected on a magnified image of the reinforcing member surface (e.g. at a magnification of 100) taken by a microscope. Further, the pitch P1 is an arithmetic mean of measurements of 10 different spacings arbitrarily selected on a magnified image of the reinforcing member surface (e.g. at a magnification of 100) taken by a microscope. $Aperture ratio \left(%\right) of reinforcing member = {\left[P1/\left(P1+R1\right)\right]}^{2} \times 100$ ε

The denier count of yarns constituting the reinforcing member is preferably 2 or more. With a view to achieving higher strength and dimensional stability of the electrolyte membrane, the denier count is more preferably 10 or more, particularly preferably 15 or more.

The upper limit value of the denier count of yarns constituting the reinforcing member is preferably 60 or less, more preferably 50 or less, particularly preferably 20 or less, with a view to achieving a lower electrolysis voltage.

Here, the denier count refers to a value that expresses the mass of 9,000 m of yarns in grams (g/9000 m).

With a view to achieving high strength and dimensional stability of the electrolyte membrane, the density of yarns constituting the reinforcing member is preferably 50 yarns/inch or more, more preferably 70 yarns/inch or more, particularly preferably 90 yarns/inch or more. With a view to achieving a lower electrolysis voltage, the density of yarns constituting the reinforcing member is preferably 200 yarns/inch or less, more preferably 150 yarns/inch or less, particularly preferably 100 yarns/inch or less.

The yarns constituting the reinforcing member can be each composed of either a monofilament consisting of one filament or a multifilament consisting of two or more filaments. Preferred is a monofilament.

The reinforcing member (more preferably woven fabric) is preferably made of a material selected from the group consisting of a polytetrafluoroethylene (hereinafter also referred to as "PTFE"), a tetrafluoroethylene/perfluoroalkyl vinyl ether copolymer (hereinafter also referred to as "PFA"), a polyether ether ketone (hereinafter also referred to as "PEEK") and a polyphenylene sulfide (hereinafter also referred to as "PPS") to achieve higher durability of the yarns.

The yarns constituting the reinforcing member are preferably in the form of slit yarns to achieve higher durability and strength of the yarns.

In the case where the material constituting the reinforcing member is PTFE, in view of good balance between strength and handleability of the electrolyte membrane, the fabric weight of the reinforcing member is preferably 20 g/m² or more, more preferably 30 g/m² or more, and is preferably 40 g/m² or less.

In the case where the material constituting the reinforcing member is PFA, in view of good balance between strength and handleability of the electrolyte membrane, the fabric weight of the reinforcing member is preferably 10 g/m² or more, and is preferably 30 g/m² or less, more preferably 20 g/m² or less.

In the case where the material constituting the reinforcing member is PEEK, in view of good balance between strength and handleability of the electrolyte membrane, the fabric weight of the reinforcing member is preferably 5 g/m² or more, and is preferably 40 g/m² or less, more preferably 30 g/m² or less.

In the case where the material constituting the reinforcing member is PPS, in view of good balance between strength and handleability of the electrolyte membrane, the fabric weight of the reinforcing member is preferably 5 g/m² or more, and is preferably 40 g/m² or more, more preferably 30 g/m² or less.

The content of the reinforcing member to the total mass of the electrolyte membrane is preferably 3 mass% or more, more preferably 5 mass% or more, and is preferably 50 mass% or less, more preferably 40 mass% or less, further preferably 30 mass% or less.

The reinforcing member may be provided inside the first layer, may be provided inside the second layer, or may be provided at the interface between the first layer and the second layer, and with a view to suppressing curling of the electrolyte membrane, preferably provided at the interface between the first layer and the second layer.

The electrolyte membrane may have other member other than the first layer, the second layer and the reinforcing member, however, it is preferably an electrolyte membrane composed of the first layer, the second layer and the reinforcing member without having other member.

The mass of the platinum-containing material per 1 cm² of the electrolyte membrane is preferably 0.005 mg/cm² or more, more preferably 0.010 mg/cm² or more, further preferably 0.015 mg/cm² or more, and is preferably 0.050 mg/cm² or less, more preferably 0.040 mg/cm² or less. When the mass of the platinum-containing material is 0.015 mg/cm² or more, the hydrogen crossover can further be suppressed. When the mass of the platinum-containing material is 0.050 mg/cm² or less, the electrolysis voltage can further be decreased, and a membrane electrode assembly and a water electrolyzer can be provided at low cost.

In the electrolyte membrane, with a view to suppressing the hydrogen crossover, the second layer preferably contains no platinum-containing material. In a case where the second layer contains no platinum-containing material, the thickness T₁ of the first layer is 50% or less of the thickness of the electrolyte membrane (the sum of the thickness T₁ of the first layer and the thickness T₂ of the second layer), more preferably 42% or less of the thickness of the electrolyte membrane, further preferably 33% or less of the thickness of the electrolyte membrane, particularly preferably 17% or less of the thickness of the electrolyte membrane.

The electrolyte membrane preferably further contains the cerium oxide.

It is considered that when the electrolyte membrane further contains the cerium oxide, the electrolyte membrane will have improved chemical durability. This is estimated to be because when the electrolyte membrane is applied to a water electrolyzer, OH radicals generated from hydrogen peroxide formed in the system during operation are quenched by cerium ions dissociated from the cerium oxide contained in the electrolyte membrane whereby decomposition of the fluorinated polymer can be suppressed.

The cerium oxide contained in the electrolyte membrane is as described above including the preferred embodiment.

The cerium oxide contained in the electrolyte membrane may be present as dispersed in the entire electrolyte membrane, or may be arranged biased to one side of the electrolyte membrane. For example, the concentration of the cerium oxide in the first layer may be higher than, lower than, or equal to, the concentration of the cerium oxide in the second layer. Particularly, it is preferred that the concentration of the cerium oxide in the first layer is higher than the concentration of the cerium oxide in the second layer, it is more preferred that the first layer contains the cerium oxide and the second layer contains no cerium oxide.

It is preferred that the electrolyte membrane contains substantially no thickener because the use of a thickener leads to an increase of membrane resistance. When the electrolyte membrane contains substantially no thickener, it means that the content of the thickener is 0.1 mass% or less to the total mass of the electrolyte membrane. The content of the thickener is preferably 0.01 mass% or less, more preferably 0 mass%.

The thickener may be a thickener contained in the catalyst layer of each of the anode and the cathode. Specific examples of the thickener contained in the catalyst layer will be described later.

### [Physical property of electrolyte membrane]

The thickness of the electrolyte membrane is preferably 30 µm or more, and is preferably 400 µm or less, more preferably 300 µm or less, further preferably 200 µm or less, particularly preferably 90 µm or less, most preferably 60 µm or less. The thickness of the electrolyte membrane may be the above-described sum of the thickness T₁ of the first layer and the thickness T₂ of the second layer.

The thickness of the electrolyte membrane is obtained by conducting thickness measurements at arbitrary 20 points on a magnified cross-sectional image (e.g. at a magnification of 100) along the thickness direction of the electrolyte membrane taken by an optical microscope (model "BX-51", manufactured by Olympus Corporation) and taking the arithmetic mean of the 20 thickness measurements as the thickness of the electrolyte membrane. In the case where there are convex-concave parts on the surface of the electrolyte membrane, the thickness of the electrolyte membrane is an arithmetic mean of thickness measurements at total 20 points, i.e., 10 points on concave parts of the electrolyte membrane and 10 points on convex parts of the electrolyte membrane. In the case where yarns constituting the woven fabric are contained in convex parts of the electrolyte membrane, the thickness of such yarns is subtracted from the thickness of the convex parts.

### [Electrolyte membrane production method]

As an example of an electrolyte membrane production method, the following method may be mentioned.

First, a polymer of a fluorinated monomer having a group convertible to ion exchange group, of which the content of the groups convertible to ion exchange groups is adjusted so as to obtain the fluorinated polymer (1-1) (hereinafter this polymer will also be referred to as "fluorinated polymer (I'-1)") is prepared. Further, a polymer of a fluorinated monomer having a group convertible to ion exchange group, of which the content of the groups convertible to ion exchange groups is adjusted so as to obtain the fluorinated polymer (I-2) (hereinafter this polymer will also be referred to as "fluorinated polymer (I'-2)") is prepared.

Then, by melt-extrusion, a kneaded product A' containing the fluorinated polymer (I'-1) and the platinum-containing material is extruded into a film shape to obtain a precursor membrane A. Likewise, by melt-extrusion, a kneaded product B' containing at least the fluorinated polymer (I'-2) is extruded into a film shape to obtain a precursor membrane B. Here, by using the kneaded product B' containing no platinum-containing material, the precursor membrane B containing no platinum-containing material is obtained. In a case where the kneaded product B' further containing the platinum-containing material is used, the content of the platinum-containing material in the kneaded product B' is adjusted so that the concentration of the platinum-containing material in the precursor membrane B is lower than the concentration of the platinum-containing material in the precursor membrane A.

In preparation of the precursor membranes A and B, their thicknesses are adjusted so that the thickness T_{A} of the precursor membrane A will be less than the thickness T_{B} of the precursor membrane B.

Then, the precursor membrane A, the reinforcing member and the precursor membrane B are arranged in this order and laminated together by laminating rolls, by a vacuum lamination apparatus or a hot-pressing apparatus to obtain a laminate. Then, the groups convertible to ion exchange groups in the precursor membranes A and B are converted to ion exchange groups. With this, the electrolyte membrane having the first layer, the reinforcing member and the second layer as shown in Fig. 1 is obtained. In the thus-obtained electrolyte membrane, the concentration of the platinum-containing material in the second layer is lower than the concentration of the platinum-containing material in the first layer, the ion exchange capacity of the fluorinated polymer (1-1) contained in the first layer is higher than the ion exchange capacity of the fluorinated polymer (I-2) contained in the second layer, and the reinforcing member is provided on the surface A side relative to the center position in the thickness direction of the electrolyte membrane.

As another example of the electrolyte membrane production method, the following method may be mentioned.

First, the groups convertible to ion exchange groups of the fluorinated polymer (I'-1) are converted to ion exchange groups to obtain the fluorinated polymer (I-1). Using a dispersion A having the fluorinated polymer (I-1) and the platinum-containing material dispersed, an electrolyte membrane A (corresponding to the first layer) is obtained by cast coating.

Further, the groups convertible to ion exchange groups of the fluorinated polymer (I'-2) are converted to ion exchange groups to obtain the fluorinated polymer (I-2). Using a dispersion B having the fluorinated polymer (I-2) dispersed, an electrolyte membrane B (corresponding to the second layer) is obtained by cast coating. By using the dispersion B containing no platinum-containing material, the electrolyte membrane B containing no platinum-containing material is obtained. In a case where the dispersion B further containing the platinum-containing material is used, the content of the platinum-containing material in the dispersion B is adjusted so that the concentration of the platinum-containing material in the electrolyte membrane B is lower than the concentration of the platinum-containing material in the electrolyte membrane A.

In preparation of the electrolyte membranes A and B, their thicknesses are adjusted so that the thickness T_{A} of the electrolyte membrane A is less than the thickness T_{B} of the electrolyte membrane B.

Then, the electrolyte membrane A, the reinforcing member and the electrolyte membrane B are stacked in this order and laminated together by laminating rolls, by a vacuum lamination apparatus or by a hot-pressing apparatus to obtain an electrolyte membrane having the first layer, the reinforcing member and the second layer as shown in Fig. 1.

As a still another example of the electrolyte membrane production method, the following method may be mentioned.

First, in accordance with the above method, the electrolyte membrane A and the electrolyte membrane B are obtained.

Then, the reinforcing member is immersed in the dispersion B having the fluorinated polymer (I-2) dispersed and dried to obtain an electrolyte membrane C containing the fluorinated polymer (I-2) and the reinforcing member (corresponding to the second layer having the reinforcing member inside).

In preparation of the electrolyte membranes A, B and C, their thicknesses are adjusted so that the sum of the thickness T_{A} of the electrolyte membrane A and the thickness Tc of the electrolyte membrane C will be less than the thickness T_{B} of the electrolyte membrane B.

Then, the electrolyte membrane A, the electrolyte membrane C and the electrolyte membrane B are stacked in this order and laminated together by laminating rolls, by a vacuum lamination apparatus or by a hot-pressing apparatus to obtain an electrolyte membrane having the first layer, the reinforcing member and the second layer as shown in Fig. 2.

As a still another example of the electrolyte membrane production method, the following method may be mentioned.

First, the groups convertible to ion exchange groups in the fluorinated polymer (I'-1) are converted to ion exchange groups to obtain the fluorinated polymer (I-1). The reinforcing member is immersed in a dispersion A having the fluorinated polymer (1-1) and the platinum-containing material dispersed and dried to obtain an electrolyte membrane A containing the fluorinated polymer (1-1) and the reinforcing member (corresponding to the first layer containing the reinforcing member inside).

Further, in accordance with the above method, the electrolyte membrane B is obtained.

In preparation of the electrolyte membranes A and B, their thicknesses are adjusted so that the thickness T_{A} of the electrolyte membrane A will be less than the thickness T_{B} of the electrolyte membrane B.

Then, the electrolyte membrane A containing the reinforcing member inside, and the electrolyte membrane B, are laminated together by laminating rolls, by a vacuum lamination apparatus or by a hot-pressing apparatus to obtain an electrolyte membrane having the first layer, the reinforcing member and the second layer.

In the above production method, by incorporating the cerium oxide to at least one of the kneaded product A' and the kneaded product B' or at least one of the dispersion A and the dispersion B, the electrolyte membrane containing the cerium oxide can be obtained.

### <Fluorinated polymers (I'-1) and (I'-2)>

The fluorinated polymer (I'-1) and the fluorinated polymer (I'-2) differ in the content of the groups convertible to ion exchange groups. The fluorinated polymer (I'-1) and the fluorinated polymer (I'-2) may have the same structure except for the content of the groups convertible to ion exchange groups, or may have different structures. Specifically, the types of the groups convertible to ion exchange groups, and the types and the contents of the units of the fluorinated polymer (I'-1) and the fluorinated polymer (I'-2) may be the same or different.

In the following, both of the fluorinated polymer (I'-1) and the fluorinated polymer (I'-2) will also be referred to generally as "fluorinated polymer (I')".

As the fluorinated polymer (I'), for example, a polymer of a fluorinated monomer having a group convertible to a sulfonic acid functional group (hereinafter also referred to as a "fluorinated monomer (S')") (hereinafter this polymer will also be referred to as a "fluorinated polymer (S')") or a polymer of a fluorinated monomer having a group convertible to a carboxylic acid functional group may be mentioned, the fluorinated polymer (S') is preferred, and a copolymer of a fluorinated olefin and a monomer having a group convertible to a sulfonic acid functional group and a fluorine atom, is more preferred.

The fluorinated polymer (S') will be now described in detail below.

As a copolymerization method for production of the fluorinated polymer (S'), a known method such as solution polymerization, suspension polymerization or emulsion polymerization may be employed.

The fluorinated olefin can be any of those mentioned above, and is preferably TFE in terms of the monomer production cost, the reactivity with other monomers and the ability to give the fluorinated polymer (S) with excellent properties.

Single type of the fluorinated olefin may be used or two or more types may be used in combination.

The fluorinated monomer (S') may be a compound having at least one fluorine atom in the molecule, having an ethylenic double bond and having a group convertible to a sulfonic acid functional group.

As the fluorinated monomer (S'), a compound represented by the formula (2) is preferred in terms of the monomer production cost, the reactivity with other monomers and the ability to give the fluorinated polymer (S) with excellent properties.

Formula (2) CF₂=CF-L-(A)ₙ

In the formula (2), definitions, etc. of L and n are the same as L and n in the above formula (1).

A is a group convertible to a sulfonic acid functional group. As the group convertible to a sulfonic acid functional group, preferred is a functional group that can be converted to a sulfonic acid functional group by hydrolysis. Specific examples of the group convertible to a sulfonic acid functional group include -SO₂F, -SO₂Cl and - SO₂Br. The n A groups may be the same or different.

As the compound represented by the formula (2), a compound represented by the formula (2-1), a compound represented by the formula (2-2), a compound represented by the formula (2-3) or a compound represented by the formula (2-4) is preferred.

Formula (2-1) CF₂=CF-O-R^{f1}-A

Formula (2-2) CF₂=CF-R^{f1}-A

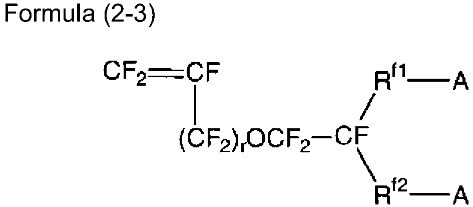

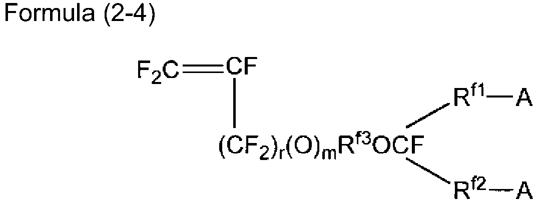

In the formulae, the definitions, etc., of R^{f1}, R^{f2}, R^{f3}, r and m are the same as R^{f1}, R^{f2}, R^{f3}, r and m in the above formula (1-1), (1-2), (1-3) or (1-4), and A is the same as A in the above formula (2).

As the compound represented by the formula (2-1) and the compound represented by the formula (2-2), a compound represented by the formula (2-5) is preferred.

Formula (2-5) CF₂=CF-(CF₂)ₓ-(OCF₂CFY)_{y}-O-(CF₂)_{z}-SO₃F

In the formula, definitions, etc. of x, y, z and Y are the same as x, y, z and Y in the above formula (1-5).

Specific examples of the compound represented by the formula (2-1) include the following compounds where w is an integer of 1 to 8 and v is an integer of 1 to 5.

CF₂=CF-O-(CF₂)_{w}-SO₂F

CF₂=CF-O-CF₂CF(CF₃)-O-(CF₂)_{w}-SO₂F

CF₂=CF-[O-CF₂CF(CF₃)]ᵥ-SO₂F

Specific examples of the compound represented by the formula (2-2) include the following compounds where w is an integer of 1 to 8

CF₂=CF-(CF₂)_{w}-SO₂F

CF₂=CF-CF₂-O-(CF₂)_{w}-SO₂F

As the compound represented by the formula (2-3), a compound represented by the formula (2-3-1) is preferred.

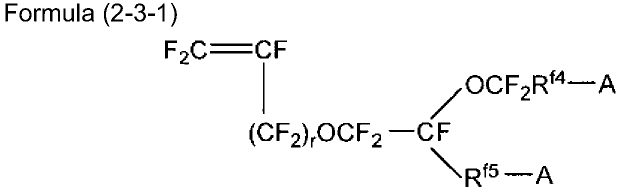

In the formula, R^{f4}, R^{f5}, r and A are as defined above.

Specific examples of the compound represented by the formula (2-3-1) include the following compounds.

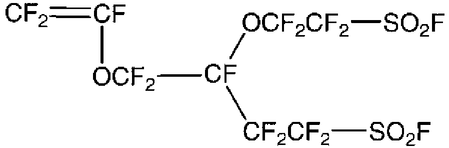

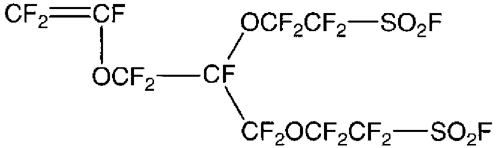

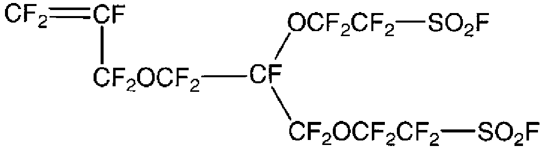

As the compound represented by the formula (2-4), a compound represented by the formula (2-4-1) is preferred.

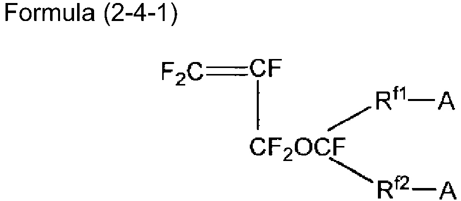

**In** the formula, R^{f1}, R^{f2} and A are as defined above.

Specific examples of the compound represented by the formula (2-4-1) include the following compound.

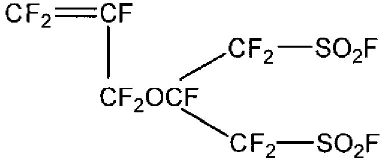

Single type of the fluorinated monomer (S') may be used or two or more types may be used in combination.

For production of the fluorinated polymer (S'), other monomer may be used in addition to the fluorinated olefin and the fluorinated monomer (S'). The other monomer can be any of those mentioned above.

The ion exchange capacities of the fluorinated polymer (I-1) and the fluorinated polymer (I-2) can be adjusted by respectively changing the contents of the groups convertible to ion exchange groups in the fluorinated polymer (I'-1) and the fluorinated polymer (I'-2).

In the above-described electrolyte membrane production method, the conversion of the groups convertible to ion exchange groups in the precursor membrane to ion exchange groups may be carried out by, for example, subjecting the precursor membrane or the laminate having the precursor membrane to treatment such as hydrolysis and conversion to acid form.

In particular, preferred is contact treatment of the precursor membrane or the laminate having the precursor membrane with an aqueous alkaline solution.

The treatment on the precursor membrane described below includes a treatment on the laminate having the precursor membrane.

The contact treatment of the precursor membrane with the aqueous alkaline solution may be performed by, for example, immersion of the precursor membrane in the aqueous alkaline solution, spraying of the aqueous alkaline solution onto the surface of the precursor membrane, or the like.

The temperature of the aqueous alkaline solution is preferably 30°C or higher, more preferably 40°C or higher, and is preferably 100°C or lower. The contact time of the precursor membrane and the aqueous alkaline solution is preferably 3 minutes or more, more preferably 5 minutes or more, and is preferably 150 minutes or less, more preferably 50 minutes or less.

The aqueous alkaline solution preferably contains an alkali metal hydroxide, a water-soluble organic solvent and water.

The alkali metal hydroxide may be sodium hydroxide or potassium hydroxide.

In the present specification, the water-soluble organic solvent refers to an organic solvent easily soluble in water. Specifically, preferred is an organic solvent with a solubility of 0.1 g or more in 1000 mL of water (20°C), and an organic solvent with a solubility of 0.5 g or more is particularly preferred. The water-soluble organic solvent preferably contains at least one kind selected from the group consisting of aprotic organic solvents, alcohols and amino alcohols, and particularly preferably contains an aprotic organic solvent.

Single type of the water-soluble organic solvent may be used or two or more types may be used in combination.

Specific examples of the aprotic organic solvents include dimethyl sulfoxide, N,N-dimethylformamide, N,N-dimethylacetamide, N-methyl-2-pyrrolidone and N-ethyl-2-pyrrolidone. Preferred is dimethyl sulfoxide.

Specific examples of the alcohols include methanol, ethanol, isopropanol, butanol, methoxyethoxyethanol, butoxyethanol, butylcarbitol, hexyloxyethanol, octanol, 1-methoxy-2-propanol and ethylene glycol.

Specific examples of the amino alcohols include ethanolamine, N-methyl ethanolamine, N-ethyl ethanolamine, 1-amino-2-propanol, 1-amino-3-propanol, 2-aminoethoxyethanol, 2-aminothioethoxyethanol and 2-amino-2-methyl-1-propanol.

The concentration of the alkali metal hydroxide in the aqueous alkaline solution is preferably 1 mass% or higher, more preferably 3 mass% or higher, and is preferably 60 mass% or lower, more preferably 55 mass% or lower.

The content of the water-soluble organic solvent in the aqueous alkaline solution is preferably 1 mass% or more, more preferably 3 mass% or more, and is preferably 60 mass% or less, more preferably 55 mass% or less.

The concentration of water in the aqueous alkaline solution is preferably 39 to 80 mass%.

After the contact treatment of the precursor membrane with the aqueous alkaline solution, any treatment for removing the aqueous alkaline solution may be performed. The aqueous alkaline solution may be removed by, for example, washing, with water, the precursor membrane contact-treated with the aqueous alkaline solution.

After the contact treatment of the precursor membrane with the aqueous alkaline solution, the thus-obtained membrane may be further treated by contact with an aqueous acidic solution to convert the ion exchange groups to acid form.

The contact treatment of the precursor membrane with the aqueous acidic solution may be performed by, for example, immersion of the precursor membrane in the aqueous acidic solution or spraying of the aqueous acidic solution onto the surface of the precursor membrane.

The aqueous acidic solution preferably contains an acid component and water.

Specific examples of the acid component include hydrochloric acid and sulfuric acid.

### [Membrane electrode assembly]

The membrane electrode assembly of the present disclosure includes the above-mentioned electrolyte membrane, a cathode catalyst layer provided on one surface of the electrolyte membrane and an anode catalyst layer provided on the other surface of the electrolyte membrane.

When the electrolyte membrane is applied to a water electrolyzer, with a view to further suppressing the hydrogen crossover, it is preferred to arrange the surface A on the first layer side of the electrolyte membrane, to the anode side. In this case, with a view to further achieving the above effects, the catalyst contained in the catalyst layer of the anode preferably contains iridium oxide.

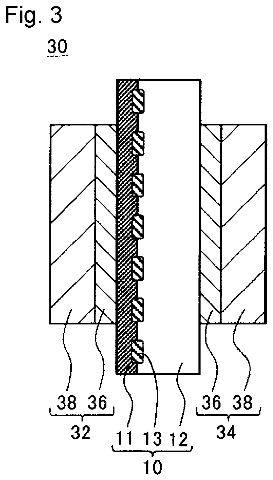

Fig. 3 is a cross-sectional view schematically illustrating an example of the membrane electrode assembly of the present disclosure. In the example of Fig. 3, a membrane electrode assembly 30 includes: an anode 32 with a catalyst layer 36 and a gas diffusion layer 38; a cathode 34 with a catalyst layer 36 and a gas diffusion layer 38; and an electrolyte membrane 10 disposed between the anode 32 and the cathode 34 in contact with the respective catalyst layers 36. In the electrolyte membrane 10, from the anode 32 side toward the cathode 34 side, the first layer 11 and the second layer 12 are arranged in this order and the reinforcing member 13 is provided on the surface A side.

Although the electrolyte membrane 10 has a double-layer structure in the example of Fig. 3, the electrolyte membrane of the membrane electrode assembly may have a structure of three or more layers.

### <Anode and cathode>

Each of the anode and the cathode has a catalyst layer. In the example of Fig. 3, each of the anode 32 and the cathode 34 has a catalyst layer 36 and a gas diffusion layer 38.

The catalyst layer may be, for example, a layer containing a catalyst and a polymer having ion exchange groups.

Specific examples of the catalyst include: a supported catalyst having platinum, a platinum alloy or a platinum-based core-shell catalytic material supported on a carbon carrier; an iridium oxide catalyst; a composite oxide catalyst containing iridium and a different metal element; an iridium oxide alloy-based catalyst; and an iridium oxidebased core-shell catalytic material. As the carbon carrier, a carbon black powder may be mentioned.

As the polymer having ion exchange groups, a fluorinated polymer having ion exchange groups may be mentioned, for example, the above-described fluorinated polymer (I-1) or (I-2) may be used.

The mass of the catalyst metal per 1 cm² of the catalyst layer is preferably 0.05 mg/cm² or more, more preferably more than 0.05 mg/cm², further preferably 0.2 mg/cm² or more, and is preferably 4 mg/cm² or less, more preferably 2 mg/cm² or less, further preferably 1 mg/cm² or less.

The mass ratio of the catalyst to the polymer having ion exchange groups (mass of catalyst/mass of polymer having ion exchange groups) in the catalyst layer is preferably 2 to 6.

The catalyst layer preferably contains a thickener from the viewpoint of dispersibility improvement and agglomeration suppression of the catalyst.

As specific examples of the thickener, various thickeners may be mentioned including urethane-based thickeners, polyacrylate-based thickeners, polyamide-based thickeners, cellulose-based thickeners and clay minerals such as bentonite. Further, ZEORORA (registered trademark) H (manufactured by Zeon Corporation) and the like are also usable as the thickener.

In the case where the catalyst layer contains a thickener, the content of the thickener to the total mass of the after-mentioned catalyst layer forming ink is preferably 2 mass% or more, more preferably 3 mass% or more, and is preferably 7 mass% or less, more preferably 6 mass% or less.

The gas diffusion layer functions to promptly diffuse gas generated from the catalyst layer to the outside of the catalyst layer, and also functions as a current collector. For example, the gas diffusion layer can be in the form of a carbon paper, a carbon cloth, a carbon felt, a sintered product of titanium oxide fiber, a sintered product of titanium oxide particles, or the like. In view of the facts that: the anode side is high in potential and carbon materials are oxidized during use, it is preferred to use a sintered product of titanium oxide fiber or a sintered product of titanium oxide particles. A sintered product of titanium oxide may be plated with platinum or the like as necessary.

The cathode gas diffusion layer may be made water repellent by applying PTFE or the like.

Although the membrane electrode assembly of Fig. 3 has gas diffusion layers 38, the gas diffusion layers are optional, and the membrane electrode assembly may have no gas diffusion layers.

The membrane thicknesses of the anode and the cathode are each independently preferably 5 µm or more, and is preferably 100 µm or less, more preferably 50 µm or less, further preferably 30 µm or less, particularly preferably 15 µm or less.

Each of the membrane thicknesses of the anode and the cathode is determined by observing, with a laser microscope, a cross section of the membrane electrode assembly cut in the membrane thickness direction, as an arithmetic mean of thickness measurements at arbitrary 20 points on the cross-sectional image of the membrane electrode assembly.

### <Membrane electrode assembly production method>

A membrane electrode assembly production method includes forming the cathode catalyst layer on the surface B side of the electrolyte membrane and forming the anode catalyst layer on the surface A side of the electrolyte membrane.

For example, the membrane electrode assembly may be produced by using a laminate having the anode catalyst layer on a releasable base material (such as an ETFE sheet) and a laminate having the cathode catalyst layer on a releasable base material (such as an ETFE sheet), bonding the catalyst layers to both sides of the electrolyte membrane and peeling off the releasable base materials.

In each of the above-mentioned laminates, the gas diffusion layer may be provided between the catalyst layer and the releasable base material. In this case, the gas diffusion layer is arranged on the opposite side of the catalyst layer from the electrolyte membrane.

The catalyst layers may be formed by applying a catalyst layer forming ink to predetermined areas (such as surfaces of the releasable base materials), followed by drying as necessary. The catalyst layer forming ink is a dispersion of the polymer having ion exchange groups and the catalyst in a dispersion medium.

### <Applications>

The membrane electrode assembly of the present disclosure is suitably applicable to a polymer electrolyte membrane water electrolyzer.

### [Water electrolyzer]

The water electrolyzer of the present disclosure includes the above-mentioned membrane electrode assembly, a water supply unit for supplying water to the anode catalyst layer side and a power supply unit for electrical connection between the anode catalyst layer side and the cathode catalyst layer side.

In the water electrolyzer of the present disclosure, when a direct-current voltage is applied by the power supply unit in a state that water is supplied to the anode catalyst layer side by the water supply unit, water is decomposed into oxygen and protons on the anode catalyst layer side. The protons transferring to the cathode catalyst layer side through the electrolyte membrane receive electrons to form hydrogen on the cathode catalyst layer side.

The water electrolyzer of the present disclosure may have the same configuration as that of a known water electrolyzer (for example, an oxygen recovery member to recover the generated oxygen and a hydrogen recovery member to recover the generated hydrogen) except that it has the above members.

### [Hydrogen production method]

The hydrogen production method of the present disclosure is a method comprising electrolyzing water (electrolytic solution) using the above-described water electrolyzer to produce hydrogen. It is considered that according to the hydrogen production method of the present disclosure, which employs the water electrolyzer of the present disclosure, hydrogen can be produced efficiently.

### EXAMPLES

Now, the present invention will be described in further detail with reference to Examples. Ex. 1 to 7 correspond to Examples of the present invention, and Ex. 8 to 10 correspond to Comparative Examples. It should be understood that the present invention is by no means restricted thereto.

### [Measurement]

Physical properties of the electrolyte membrane in each Ex. were measured by the following methods. The measurement results are shown in the following Table 1.

### <Ion exchange capacity of fluorinated polymer>

The weight of a fluorinated polymer was measured, after 24 hours of incubation in a glove box purged with dry nitrogen, as the dry mass of the fluorinated polymer. Then, the fluorinated polymer was immersed in a 2 mol/L aqueous sodium chloride solution at 60°C for 1 hour. After the fluorinated polymer was washed with ultrapure water and recovered, the solution in which the fluorinated polymer had been immersed was titrated with 0.1 mol/L aqueous sodium hydroxide solution to determine the ion exchange capacity (meq/g dry resin, described as "meq/g" in the following Table 1) of the fluorinated polymer used in production of the electrolyte membrane in each Ex.

### <Thicknesses of electrolyte membrane, first layer and second layer>

The thickness T₁ of the first layer, the thickness T₂ of the second layer, and the sum of the thickness T₁ of the first layer and the thickness T₂ of the second layer, that is T₁+T₂, were measured by observation on a magnified image of the cross section along the thickness direction of the electrolyte membrane, in accordance with the above method at a temperature of 23°C under a relative humidity of 50%RH.

### <Masses of platinum-containing material and cerium oxide>

The mass of the platinum-containing material and the mass of the cerium oxide contained in the first layer, and the mass of the platinum-containing material and the mass of the cerium oxide contained in the second layer, were obtained in accordance with the above method, by observation on a magnified cross-sectional image along the thickness direction of the electrolyte membrane using an energy dispersive X-ray spectrometer (model "QUANTAX FlatQUAD", manufactured by Bruker).

The units of the mass of the platinum-containing material and the mass of the cerium oxide are mg (mg/cm²) per 1 cm³ of the first layer or the second layer.

### [Evaluation]

The electrolyte membrane and the membrane electrode assembly obtained in each Ex. were subjected to the following evaluations. The evaluation results are shown in the following Table 1.

### <Damages on catalyst layers>

To one side of the electrolyte membrane obtained in each Ex., a catalyst layer forming composition was applied by die-coating and dried to form a catalyst layer.

On that occasion, the electrolyte membrane was cut into 210×297 mm, and the coating region was 160×247 mm so that the edges were equidistant from the respective sides of the electrolyte membrane.

At the time of applying and drying the catalyst layer forming composition, the four corners of the electrolyte membrane were held with a polyimide heat-resistant tape (manufactured by TERAOKA SEISAKUSHO Co., Ltd., Kapton (registered trademark) adhesive tape).

On the other side, a catalyst layer was formed in the same manner.

The surface of the catalyst layers after coating and drying was observed to visually confirm whether the surface of the coating layers was damaged or not.

Based on the observation results, the damage resistance of the surface of the catalyst layers was evaluated based on the following standards. For practical application, the grade A, B or C is preferred. The evaluation results of the damage resistance are shown in the following Table 1. The higher the damage resistance is, the more excellent performance to suppress curling of the electrolyte membrane is.
A: No damage observed on the surface of the catalyst layer in the coating region.
B: Less than three damages observed on the surface of the catalyst layer in the coating region.
C: Three or more and less than five damages observed on the surface of the catalyst layer in the coating region.
D: Five or more damages observed on the surface of the catalyst layer in the coating region.

### <Hydrogen concentration in oxygen>

The membrane electrode assembly obtained in each Ex. was sandwiched between platinum-coated sintered titanium fiber layers (manufactured by Bekaert) having a thickness of 0.25 mm and a porosity of 60%, and then, mounted in a single cell having an electrode area of 16 cm² and using platinum-coated titanium plates with straight channels as separators. The membrane electrode assembly was, when sandwiched, tightened so as to apply a pressure of 1.5 MPa to the electrode area.

To fully hydrate the polymer electrolyte membrane and the ionomers in the electrodes, pure water at 60°C and ordinary pressure with an electrical conductivity of 1.0 µS/cm or less was supplied to both the anode side and the cathode side at a flow rate of 50 mL/min for 8 hours. Then, water electrolysis was carried out as preliminary operation for 4 hours by supplying pure water at 60°C with an electrical conductivity of 1.0 µS/cm or less to the anode side at a flow rate of 50 mL/min, with the back pressures on the anode side and on the cathode side kept at ordinary pressure, while maintaining the electric current at 16 A (current density 1 A/cm²) by a high current potentio/galvanostat HCP-803 (manufactured by BioLogic). Water hydrolysis was further carried out as main measurement operation by increasing the electric current by 2A in a stepwise manner from 0 to 32 A (current density from 0 to 2 A/cm²).

After that, the electric current was maintained at 3.2 A (current density 0.2 A/cm²) for 12 hours by the high current potentio/galvanostat HCP-803 (manufactured by BioLogic) while supplying pure water at 60°C and ordinary pressure with an electrical conductivity of 1.0 µS/cm or less to the cell at a flow rate of 50 mL/min, with the back pressures on the anode side and the cathode side kept at ordinary pressure. After the lapse of 12 hours, water was separated from the gas generated from the anode side, and the concentration of hydrogen in the gas was measured by a micro GC (Agilent 490, manufactured by Agilent Technologies). The hydrogen concentration in oxygen (H₂ concentration in O₂) was evaluated according to the following standards. The lower the H₂ concentration in O₂ is, the more excellent the performance to suppress the hydrogen crossover is.
A: Lower than 0.03 vol%
B: 0.03 vol% or higher and lower than 0.05 vol%
C: 0.05 vol% or higher and lower than 0.10 vol%
D: 0.10 vol% or higher

### [Ex. 1]

### <Production of precursor membrane A1>

CF₂=CF₂ and monomer (X) represented by the following formula (X) were copolymerized to obtain fluorinated polymer (I'-1) (ion exchange capacity: 1.40 meq/g dry resin). Here, the ion exchange capacity in the parentheses refers to the ion exchange capacity of a fluorinated polymer obtained by hydrolyzing the fluorinated polymer (I'-1) according to the procedure described below.

CF₂=CF-O-CF₂CF(CF₃)-O-CF₂CF₂-SO₂F (X)

Kneaded product A1 containing the fluorinated polymer (I'-1), platinum black (manufactured by TANAKA PRECIOUS METAL TECHNOLOGIES Co., Ltd., "TEC90300", the platinum-containing material) and cerium oxide (manufactured by FUJIFILM Wako Pure Chemical Corporation, primary particle size:10 to 50 nm, CeO₂) was prepared.

To a base material composed of a linear low density polyethylene (LLDPE) film (melting point:110 to 120°C), the kneaded product A1 was attached by melt-extrusion to obtain precursor membrane-provided base material X1 having provided on the base material precursor membrane A1 (membrane thickness: 10 µm) that contained the fluorinated polymer (I'-1), the platinum black and the cerium oxide.

In preparation of the kneaded product A1, the amounts of the platinum black and the cerium oxide added to the kneaded product A1 were respectively adjusted so that the masses of the platinum-containing material and the cerium oxide contained in the first layer obtained by hydrolysis of the precursor membrane A1 by the procedure described below would be as identified in the following Table 1.

### <Production of precursor membrane B1 >

CF₂=CF₂ and monomer (X) represented by the above formula (X) were copolymerized to obtain fluorinated polymer (I'-2) (ion exchange capacity: 1.25 meq/g dry resin). The ion exchange capacity in the parentheses refers to the ion exchange capacity of the fluorinated polymer obtained by hydrolyzing the fluorinated polymer (I'-2) by the procedure described below.

Kneaded product B1 containing the obtained fluorinated polymer (I'-2) and containing neither platinum black nor cerium oxide was prepared.

To a base material composed of a linear low density polyethylene (LLDPE) film (melting point: 110 to 120°C), the kneaded product B1 was attached by melt-extrusion to obtain precursor membrane-provided base material Y1 having provided on the base material precursor membrane B1 (membrane thickness: 50 µm) that contained the fluorinated polymer (I'-2).

### <Production of woven fabric>

Using 18.6-denier yarns of PFA as warp yarns and weft yarns, woven fabric A1 was produced by plain weaving such that the density of the PFA yarns was 100 yarns/inch. The fabric weight of the woven fabric A1 was 16.3 g/m².

### <Production of electrolyte membrane 1>

The precursor membrane-provided base material X1, the woven fabric A1 and the precursor membrane-provided base material Y1 were supplied to a roll pressing machine so that they are stacked in this order. The precursor membrane-provided base material X1 was arranged so that the precursor membrane A1 was in contact with the woven fabric A1, and the precursor membrane-provided base material Y1 was arranged so that the precursor membrane B1 was in contact with the woven fabric A1.

Using the roll pressing machine, the members were hot-pressed at 150°C under 1.5 MPa for 2 minutes to obtain precursor laminate 1 having the precursor membrane A1, the woven fabric A1 and the precursor membrane B1 provided in this order and having both surfaces sandwiched between the base materials. After the hot-pressing, the base materials were peeled off from the precursor laminate 1.

The precursor laminate 1 was immersed in a solution of dimethyl sulfoxide/potassium hydroxide/water = 30/5.5/64.5 (mass ratio) at 95°C for 30 minutes to hydrolyze and convert the groups convertible to sulfonic acid functional groups in the precursor membrane to K-form sulfonic acid functional groups, and washed with water. The thus-obtained membrane was immersed in 1M sulfuric acid to convert the terminal groups from K-form to H-form, and dried to obtain electrolyte membrane 1 having a first layer, the woven fabric and a second layer in Ex. 1.

In the obtained electrolyte membrane 1, since the second layer contained no platinum-containing material, the concentration of the platinum-containing material in the second layer is lower than the concentration of the platinum-containing material in the first layer. Further, the ion exchange capacity of the fluorinated polymer (1-1) contained in the first layer is higher than the ion exchange capacity of the fluorinated polymer (I-2) contained in the second layer. Further, the reinforcing member (woven fabric A1) of the electrolyte membrane 1 was provided at the interface between the first layer and the second layer and on the surface A side of the first layer side relative to the center position in the thickness direction of the electrolyte membrane 1.

### <Production of membrane electrode assembly>

A polymer (ion exchange capacity: 1.10 meq/g dry resin) produced by copolymerization of CF₂=CF₂ and the above-mentioned monomer (X), followed by conversion to acid form through hydrolysis and acid treatment, was dispersed in a solvent of water/ethanol in a ratio of 40/60 (mass%) to obtain a dispersion with a solid content of 26.0 % (hereinafter also referred to as "dispersion Y").

The obtained dispersion Y (33.0 g) was mixed with ethanol (18.06 g) and ZEORORA H (manufactured by Zeon Corporation, 10.58 g) by a planetary centrifugal mixer (THINKY MIXER, manufactured by THINKY CORPORATION) at 2,200 rpm for 5 minutes. The mixed composition (54.06 g) was mixed with ethanol (46.44 g) and water (75.75 g) and further mixed with an iridium oxide catalyst (40.0 g) (manufactured by TANAKA PRECIOUS METAL TECHNOLOGIES Co., Ltd.) containing 74.8 mass% iridium and having a specific surface area of 100 m²/g. The resulting mixed composition was processed in a planetary bead mill (number of revolutions: 300 rpm) for 90 minutes to obtain an anode catalyst ink with a solid content of 22 mass%.

The anode catalyst ink was applied by an applicator to an ETFE sheet such that the amount of iridium applied was 1.0 mg/cm², dried at 80°C for 10 minutes and heat-treated at 150°C for 15 minutes, thereby obtaining an anode catalyst layer decal.

A supported catalyst having 46 mass% platinum supported on a carbon powder ("TEC10E50E" manufactured by TANAKA PRECIOUS METAL TECHNOLOGIES Co., Ltd.) (11 g) was mixed and milled with water (59.4 g) and ethanol (39.6 g) in an ultrasonic homogenizer to obtain a catalyst dispersion.

To the catalyst dispersion, a previously kneaded mixture (29.2 g) of the dispersion Y (20.1 g), ethanol (11 g) and ZEORORA H (manufactured by Zeon Corporation) (6.3 g) was added. Further, water (3.66 g) and ethanol (7.63 g) were added to the catalyst dispersion. The obtained dispersion was mixed in a paint conditioner for 60 minutes to obtain a cathode catalyst ink with a solid content of 10.0 mass%.

The cathode catalyst ink was applied by a die coater to an ETFE sheet, dried at 80°C and heat-treated at 150°C for 15 minutes, thereby obtaining a cathode catalyst layer decal with a platinum content of 0.4 mg/cm².

The catalyst layer of the anode catalyst layer decal was arranged to face the first layer side of the above-obtained electrolyte membrane 1, and the catalyst layer of the cathode catalyst layer decal was arranged to face the second layer side of the electrolyte membrane 1. Then, the anode catalyst layer, the electrolyte membrane 1 and the cathode catalyst layer were laminated together by hot pressing for 10 minutes at a press temperature of 150°C and a pressure of 3 MPa. After cooling to 70°C and releasing the pressure, the resulting laminate was taken out, and the ETFE sheets of the anode catalyst layer decal and the cathode catalyst layer decal were peeled off to obtain membrane electrode assembly 1 having an electrode area of 16 cm².

### [Ex. 2]

Electrolyte membrane 2 and membrane electrode assembly 2 in Ex. 2 were obtained in the same manner as in Ex. 1 except that kneaded product A2 prepared with an amount of the platinum black adjusted to achieve the mass of the platinum-containing material contained in the first layer as identified in the following Table 1, was used instead of the kneaded product A1 used for the production of the precursor membrane A1.

### [Ex. 3]

### <Production of precursor membranes B31 and B32>

In the same manner as in the precursor membrane B1 production method in Ex. 1, precursor membrane-provided base material Y31 having provided on the base material precursor membrane B31 that contained the fluorinated polymer (I'-2) and had a membrane thickness of 10 µm, and precursor membrane-provided base material Y32 having provided on the base material precursor membrane B32 that contained the fluorinated polymer (I'-2) and had a membrane thickness of 40 µm, were obtained.

### <Production of electrolyte membrane 3>

The precursor membrane Y31, the woven fabric A1 and the precursor membrane-provided base material Y32 were supplied to a roll pressing machine so that they are stacked in this order. The precursor membrane-provided base material Y1 was arranged so that the precursor membrane B31 was in contact with the woven fabric A1, and the precursor membrane-provided base material Y32 was arranged so that the precursor membrane B32 was in contact with the woven fabric A1. Using the roll pressing machine, the members were hot-pressed at 150°C, under 1.5 MPa for 2 minutes to obtain precursor laminate 3A having the precursor membrane B31, the woven fabric A1 and the precursor membrane B32 provided in this order and having both surfaces sandwiched between the base materials.

Then, the base material which was in contact with the precursor membrane B31 was peeled off from the precursor laminate 3A, and the precursor membrane-provided base material X1 and the precursor laminate 3A were supplied to the roll pressing machine as stacked. The precursor membrane-provided base material X1 and the precursor laminate 3A were arranged so that the precursor membrane A1 was in contact with the precursor membrane B31. Using the roll pressing machine, the members were hot-pressed at 150°C under 1.5 MPa for 2 minutes to obtain precursor laminate 3 having the precursor membrane A1, the precursor membrane B31, the woven fabric A1 and the precursor membrane B32 provided in this order and having both surfaces sandwiched between the base materials. After the hot-pressing, the base materials were peeled off from the precursor laminate 3.

Electrolyte membrane 3 and membrane electrode assembly 3 in Ex. 3 were obtained in the same manner as in Ex. 1 except that the precursor laminate 3 was used instead of the precursor laminate 1.

### [Ex. 4]

Precursor membrane-provided base material X4 having provided on the base material precursor membrane A4 that contained the fluorinated polymer (I'-1) was obtained in the same manner as the precursor membrane A1 production method in Ex. 1 except that the amounts of the platinum black and the cerium oxide, and the amount of the kneaded product A1 attached to the base material, were adjusted so that the thickness T₁ of the first layer and the masses of the platinum-containing material and the cerium oxide contained in the first layer were as identified in the following Table 1.

Further, in the same manner as the precursor membrane B1 production method in Ex. 1, precursor membrane-provided base material Y4 having provided on the base material precursor membrane B4 that contained the fluorinated polymer (I'-2) and had a membrane thickness of 40 µm was obtained.

Electrolyte membrane 4 and membrane electrode assembly 4 in Ex. 4 were obtained in the same manner as in Ex. 1 except that the precursor membrane-provided base material X4 and the precursor membrane-provided base material Y4 were used instead of the precursor membrane-provided base material X1 and the precursor membrane-provided base material Y1.

### [Ex. 5]

CF₂=CF₂ and monomer (X) represented by the following formula (X) were copolymerized to obtain fluorinated polymer (I'-3) (ion exchange capacity: 1.95 meq/g dry resin). The ion exchange capacity in the parentheses refers to the ion exchange capacity of a fluorinated polymer obtained by hydrolyzing the fluorinated polymer (I'-3) in the procedure described below.

Electrolyte membrane 5 and membrane electrode assembly 5 in Ex. 5 were obtained in the same manner as in Ex. 1 except that the fluorinated polymer (I'-3) was used instead of the fluorinated polymer (I'-1).

### [Ex. 6]

Precursor membrane-provided base material X6 having provided on the base substrate precursor membrane A6 (membrane thickness: 10 µm) was obtained in the same manner as in Ex. 1 except that kneaded product A2 prepared by adjusting the amount of the platinum black added to achieve the mass of the platinum-containing material contained in the first layer as identified in the following Table 1, was used instead of the kneaded product A1 used for production of the precursor membrane A1.

In the same manner as in Ex. 1 except that kneaded product B6 containing the fluorinated polymer (I'-2), platinum black (TANAKA PRECIOUS METAL TECHNOLOGIES Co., Ltd., "TEC90300", the platinum-containing material) and cerium oxide (manufactured by FUJIFILM Wako Pure Chemical Corporation, primary particle size: less than 10 nm, CeO₂) was used instead of the kneaded product B1 used for production of the precursor membrane B1, precursor membrane-provided base material Y6 having provided on the base material precursor membrane B6 (membrane thickness: 50 µm) that contained the fluorinated polymer (I'-2), the platinum black and the cerium oxide, was obtained.

In preparation of the kneaded product B6, the amounts of the platinum black and the cerium oxide added to the kneaded product B6 were adjusted so that the masses of the platinum-containing material and the cerium oxide contained in the first layer obtained by hydrolysis of the precursor membrane B6 were as identified in the following Table 1.

Electrolyte membrane 6 and membrane electrode assembly 6 in Ex. 6 were obtained in the same manner as in Ex. 1 except that the precursor membrane-provided base material X6 and the precursor membrane-provided base material Y6 were used instead of the precursor membrane-provided base material X1 and the precursor membrane-provided base material Y1.

### [Ex. 7]

In the same manner as the precursor membrane B1 production method in Ex. 1, precursor membrane-provided base material Y7 having provided on the base material precursor membrane B7 that contained the fluorinated polymer (I'-2) and had a membrane thickness of 80 µm was obtained.

Electrolyte membrane 7 and membrane electrode assembly 7 in Ex. 7 were obtained in the same manner as in Ex. 1 except that the precursor membrane-provided base material Y7 was used instead of the precursor membrane-provided base material Y1.

### [Ex. 8]

Precursor membrane-provided base material X8 having provided on the base material precursor membrane A8 (membrane thickness: 10 µm) that contained the fluorinated polymer (I'-2), the platinum black and the cerium oxide was obtained in the same manner as in Ex. 1 except that the fluorinated polymer (I'-2) was used instead of the fluorinated polymer (I'-1).

Precursor membrane-provided base material Y81 having provided on the base material precursor membrane B81 that contained the fluorinated polymer (I'-2) and had a membrane thickness of 20 µm, and precursor membrane-provided base material Y82 having provided on the base material precursor membrane B82 that contained the fluorinated polymer (I'-2) and had a membrane thickness of 30 µm, were obtained in the same manner as the precursor membrane B1 production method in Ex. 1.

Electrolyte membrane 8 and membrane electrode assembly 8 in Ex. 8 were obtained in the same manner as in Ex. 3 except that precursor membrane-provided base material X8, the precursor membrane-provided base material Y81 and the precursor membrane-provided base material Y82 were used instead of the precursor membrane-provided base material X1, the precursor membrane-provided base material Y31 and the precursor membrane-provided base material Y32.

In the obtained electrolyte membrane 8, the ion exchange capacity of the fluorinated polymer (I-1) contained in the first layer and the ion exchange capacity of the fluorinated polymer (I-2) contained in the second layer were the same. Further, in the electrolyte membrane 8, the reinforcing member (woven fabric A1) was located at the center position in the thickness direction of the electrolyte membrane 8.

### [Ex. 9]

Electrolyte membrane 9 and membrane electrode assembly 9 in Ex. 9 were obtained in the same manner as in Ex. 1 except that the precursor membrane-provided base material X8 having provided on the base material the precursor membrane A8 (membrane thickness: 10 µm) produced in Ex. 8 was used instead of the precursor membrane-provided base material X1.

In the obtained electrolyte membrane 9, the ion exchange capacity of the fluorinated polymer (I-1) contained in the first layer and the ion exchange capacity of the fluorinated polymer (I-2) contained in the second layer were the same.

### [Ex. 10]

Electrolyte membrane 10 and membrane electrode assembly 10 in Ex. 10 were obtained in the same manner as in Ex. 3 except that the precursor membrane-provided base material Y81 and the precursor membrane-provided base material Y82 produced in Ex. 8 were used instead of the precursor membrane-provided base material Y31 and the precursor membrane-provided base material Y32.

In the obtained electrolyte membrane 10, the reinforcing member (woven fabric A1) was provided at the center portion in the thickness direction of the electrolyte membrane 10.

### [Results]

The configuration of the electrolyte membrane produced in each Ex., and evaluation results of damage resistance when catalyst layers were formed and hydrogen concentration in oxygen are shown in Table 1.

The thickness (unit: µm) of the electrolyte membrane shown in the "Thickness (µm)" row of the "Electrolyte membrane" row is equal to the sum of the thickness T₁ of the first layer and the thickness T₂ of the second layer.

Values in the "Distance (µm) of reinforcing member from surface A" row refers to the distance between the reinforcing member provided inside each electrolyte membrane and the surface A on the first layer A side. The distance between the reinforcing member and the surface A being equal to half the thickness of the electrolyte membrane means that the reinforcing member is provided at the center position in the thickness direction of the electrolyte membrane, and the distance between the reinforcing member and the surface A being less than half the thickness of the electrolyte membrane means that the reinforcing member is provided on the surface A side on the first layer side relative to the center position in the thickness direction of the electrolyte membrane.

**Table 1**

| Table 1 | | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|
| Electrolyte membrane | Sum of thicknesses T₁+T₂ (µm) | | 60 | 60 | 60 | 60 | 60 | 60 | 90 | 60 | 60 | 60 |
| | Distance (µm) of reinforcing member from surface A | | 10 | 10 | 20 | 20 | 10 | 10 | 10 | 30 | 10 | 30 |
| | First layer | Thickness T1 (µm) | 10 | 10 | 10 | 20 | 10 | 10 | 10 | 10 | 10 | 10 |
| | | Ion exchange capacity (meq/g) | 1.40 | 1.40 | 1.40 | 1.40 | 1.95 | 1.40 | 1.40 | 1.25 | 1.25 | 1.40 |
| | | Mass (mg/cm²) of platinum-containing material | 0.015 | 0.030 | 0.015 | 0.015 | 0.015 | 0.010 | 0.015 | 0.015 | 0.015 | 0.015 |
| | | Mass (mg/cm²) of cerium oxide | 0.015 | 0.015 | 0.015 | 0.030 | 0.015 | 0.015 | 0.015 | 0.015 | 0.015 | 0.015 |
| | Second layer | Thickness T2 (µm) | 50 | 50 | 50 | 40 | 50 | 50 | 80 | 50 | 50 | 50 |
| | | Ion exchange capacity (meq/g) | 1.25 | 1.25 | 1.25 | 1.25 | 1.25 | 1.25 | 1.25 | 1.25 | 1.25 | 1.25 |
| | | Mass (mg/cm²) of platinum-containing material | 0 | 0 | 0 | 0 | 0 | 0.005 | 0 | 0 | 0 | 0 |
| | | Mass (mg/cm²) of cerium oxide | 0 | 0 | 0 | 0 | 0 | 0.075 | 0 | 0 | 0 | 0 |
| Evaluation results | Damages on catalyst layer | | B | B | C | B | C | A | C | C | B | D |
| | H₂ concentration in O₂ | | B | A | B | C | A | C | A | D | D | B |

As shown in Table 1, the electrolyte membrane which has the first layer that contains a fluorinated polymer (I-1) having ion exchange groups and the platinum-containing material, the second layer that contains the fluorinated polymer (I-2) having ion exchange groups, and the reinforcing member; the concentration of the platinum-containing material in the second layer being lower than the concentration of the platinum-containing material in the first layer; the ion exchange capacity of the fluorinated polymer (I-1) being higher than the ion exchange capacity of the fluorinated polymer (I-2); and the reinforcing member being provided on the surface A side; was confirmed to be excellent in the performance to suppress curling and is excellent in the performance to suppress the hydrogen crossover (Ex. 1 to 7). In Ex. 8 and 9, it is considered that the hydrogen crossover could not sufficiently be decreased since the ion exchange capacity of the fluorinated polymer contained in the first layer and the ion exchange capacity of the fluorinated polymer contained in the second layer are the same. Further, in Ex. 8 and 10, it is considered that the electrolyte membrane was likely to have curling since the reinforcing member is provided at the center position in the thickness direction of the polymer electrolyte membrane, not at the interface between the first layer and the second layer.

The entire disclosure of Japanese Patent Application No. 2023-222220 filed on December 28, 2023 including specification, claims, drawings and summary is incorporated herein by reference in its entirety.

### REFERENCE SYMBOLS

10,20: electrolyte membrane (polymer electrolyte membrane)
11: first layer
12: second layer
13: reinforcing member
30: membrane electrode assembly
32: anode
34: cathode
36: catalyst layer
38: gas diffusion layer
A,B: surface
C: center plane
D: interface
T₁,T₂: thickness

## Claims

1. A polymer electrolyte membrane, which comprises:
a first layer that contains a first fluorinated polymer having ion exchange groups and a platinum-containing material, and
a second layer that contains a second fluorinated polymer having ion exchange groups,
wherein the concentration of a platinum-containing material in the second layer is lower than the concentration of the platinum-containing material in the first layer,
the ion exchange capacity of the first fluorinated polymer is higher than the ion exchange capacity of the second fluorinated polymer, and
the polymer electrolyte membrane further has a reinforcing member provided on the surface side on the first layer side of the polymer electrolyte membrane relative to the center position in the thickness direction of the polymer electrolyte membrane.

2. The polymer electrolyte membrane according to Claim 1, wherein the polymer electrolyte membrane further contains cerium oxide.

3. The polymer electrolyte membrane according to Claim 1, wherein the second layer contains no platinum-containing material.

4. The polymer electrolyte membrane according to Claim 1, wherein the reinforcing member is a woven fabric.

5. The polymer electrolyte membrane according to Claim 4, wherein the woven fabric is made of a material selected from the group consisting of a polytetrafluoroethylene, a tetrafluoroethylene/perfluoroalkyl vinyl ether copolymer, a polyether ether ketone and a polyphenylene sulfide.

6. The polymer electrolyte membrane according to Claim 1, wherein the thickness of the first layer is less than the thickness of the second layer.

7. The polymer electrolyte membrane according to Claim 1, wherein the ratio of the thickness of the first layer to the sum of the thickness of the first layer and the thickness of the second layer, is 0.50 or less.

8. The polymer electrolyte membrane according to Claim 1, wherein the sum of the thickness of the first layer and the thickness of the second layer is 30 to 400 µm.

9. The polymer electrolyte membrane according to Claim 1, wherein the absolute value of the difference between the ion exchange capacity of the first fluorinated polymer and the ion exchange capacity of the second fluorinated polymer is 0.10 to 1.40 meq/g dry resin.

10. The polymer electrolyte membrane according to Claim 1, wherein the ion exchange groups of the first fluorinated polymer are sulfonic acid functional groups, and the ion exchange groups of the second fluorinated polymer are sulfonic acid functional groups.

11. A membrane electrode assembly comprising:
the polymer electrolyte membrane as defined in any one of Claims 1 to 10,
a cathode catalyst layer provided on the surface side of the second layer of the polymer electrolyte membrane, and
an anode catalyst layer provided on the surface side of the first layer of the polymer electrolyte membrane.

12. A water electrolyzer comprising:
the membrane electrode assembly as defined in Claim 11,
a power supply unit connecting the cathode catalyst layer side and the anode catalyst layer side of the membrane electrode assembly, and
a water supply unit to supply water to the anode catalyst layer side.

13. A hydrogen production method, which comprises electrolyzing water by the water electrolyzer as defined in Claim 12 to produce hydrogen.

14. A method for producing a membrane electrode assembly comprising the polymer electrolyte membrane as defined in any one of Claims 1 to 10, a cathode catalyst layer and an anode catalyst layer,
which comprises providing the cathode catalyst layer on the surface side on the second layer side of the polymer electrolyte membrane, and providing the anode catalyst layer on the surface side on the first layer side of the polymer electrolyte membrane.
